(19) Europäisches Patentamt / European Patent Office / Office européen des brevets

(11) **EP 3 713 424 B1**

(12) **FASCICULE DE BREVET EUROPEEN**

(45) Date de publication et mention de la délivrance du brevet:
**03.11.2021 Bulletin 2021/44**

(51) Int Cl.:
*A23K 10/30* (2016.01)     *A23K 20/158* (2016.01)
*A23K 10/14* (2016.01)     *A23K 50/10* (2016.01)
*A23K 50/75* (2016.01)     *A23K 50/30* (2016.01)

(21) Numéro de dépôt: **18807075.9**

(22) Date de dépôt: **20.11.2018**

(86) Numéro de dépôt international:
**PCT/EP2018/081971**

(87) Numéro de publication internationale:
**WO 2019/101751 (31.05.2019 Gazette 2019/22)**

(54) **PROCEDE DE TRAITEMENT DE GRAINES DE LIN EN VUE D'AMELIORER LEUR VALORISATION A TITRE D'ALIMENTS**

VERFAHREN ZUR BEHANDLUNG VON FLACHSSAMEN IM HINBLICK AUF DIE VERBESSERUNG DES NÄHRWERTS DAVON

METHOD FOR TREATING FLAX SEEDS WITH A VIEW TO IMPROVING THE FOOD VALUE OF SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA TN**

(30) Priorité: **21.11.2017  FR 1760984**

(43) Date de publication de la demande:
**30.09.2020  Bulletin 2020/40**

(73) Titulaire: **Valorex**
**35210 Combourtille (FR)**

(72) Inventeurs:
• **CHESNEAU, Guillaume**
**35133 Luitre (FR)**
• **GUILLEVIC, Mathieu**
**35000 Rennes (FR)**
• **GERMAIN, Antoine**
**35510 Cesson Sevigne (FR)**
• **JUIN, Hervé**
**17700 Péré (FR)**
• **LESSIRE, Michel**
**37380 Nouzilly (FR)**
• **ENJALBERT, Francis**
**31170 Tournefeuille (FR)**
• **BUREL, Christine**
**64210 Ahetze (FR)**
• **FERLAY, Anne**
**63400 Chamaliere (FR)**

(74) Mandataire: **Regimbeau**
**20, rue de Chazelles**
**75847 Paris Cedex 17 (FR)**

(56) Documents cités:
**EP-A1- 1 155 626**

• **C.-F. WU ET AL: "An efficient fermentation method for the degradation of cyanogenic glycosides in flaxseed", FOOD ADDITIVES & CONTAMINANTS: PART A, vol. 29, no. 7, 1 juillet 2012 (2012-07-01), pages 1085-1091, XP055486888, ISSN: 1944-0049, DOI: 10.1080/19440049.2012.680202**
• **DINGYUAN FENG ET AL: "Effectiveness of different processing methods in reducing hydrogen cyanide content of flaxseed", JOURNAL OF THE SCIENCE OF FOOD AND AGRICULTURE, vol. 83, no. 8, 1 janvier 2003 (2003-01-01), pages 836-841, XP055486916, GB ISSN: 0022-5142, DOI: 10.1002/jsfa.1412**
• **TAKATOSHI YAMASHITA ET AL: "Development of a method to remove cyanogen glycosides from flaxseed meal", INTERNATIONAL JOURNAL OF FOOD SCIENCE AND TECHNOLOGY., vol. 42, no. 1, 1 janvier 2007 (2007-01-01), pages 70-75, XP055554348, GB ISSN: 0950-5423, DOI: 10.1111/j.1365-2621.2006.01212.x**

EP 3 713 424 B1

**Description**

**DOMAINE DE L'INVENTION**

La présente invention est relative à un procédé de traitement de graines de lin en vue d'améliorer leur valorisation à titre d'aliments, notamment pour les animaux.

**ARRIERE PLAN TECHNOLOGIQUE DE L'INVENTION**

En nutrition humaine, il est acquis que la consommation en matière grasse de la population française est désormais quantitativement en adéquation avec les apports nutritionnels conseillés, mais elle demeure qualitativement déséquilibrée, et plus particulièrement au niveau des acides gras (AG) essentiels (acides gras oméga 3). En effet, la consommation d'acide $\alpha$-linolénique (ALA) est en moyenne de 0,8g par personne et par jour seulement, alors que la recommandation émise par l'Anses en 2010, est de 2g. En parallèle, la consommation d'acide linoléique (LA) étant environ au niveau des apports nutritionnels conseillés, il en résulte un ratio LA/ALA excessif.

Pour veiller à un apport optimal en AG essentiels auprès du consommateur, il est possible d'agir sur le choix des aliments constitutifs de nos repas quotidiens. Mais il est aussi possible de choisir des aliments dont le mode de production des animaux a lui-même été modifié.

En effet, il est désormais bien connu que lorsque les animaux ingèrent davantage d'ALA, on retrouve davantage de cet ALA dans les produits tels que les viandes, les œufs ou les produits laitiers. C'est ainsi qu'un enjeu important réside dans le fait d'apporter aux animaux des sources d'ALA digestibles, efficaces et sécurisées. L'animal valorisera alors les AG ingérés pour les déposer dans ses tissus ou les métaboliser en différents médiateurs cellulaires jouant un rôle dans les systèmes immunitaires, inflammatoires et reproductifs par exemple.

Les Oméga 3 sont dits essentiels et indispensables parce que l'animal dont l'homme ne sait pas les synthétiser. Il doit donc nécessairement les retrouver dans son alimentation pour son propre équilibre métabolique et sa santé. Ainsi, ce qui est décrit ci-dessous pour l'animal est vrai aussi pour l'homme. Dans les lignes ci-dessous et les revendications, il faut comprendre que l'homme fait partie des animaux mammifères monogastriques, tout comme les chiens et les chats.

I. Contexte de la présente invention

A. Les attentes dans les filières

Depuis la sortie des "Apports Nutritionnels Conseillés" édité par l'ANSES (anciennement AFSSA) en 2001, exprimant l'essentialité des AG Oméga 3, et notamment de l'ALA, pour nos besoins physiologiques mais aussi leur trop faible consommation,

   1) de nombreux diététiciens, médecins et autres prescripteurs d'une alimentation saine et équilibrée ont diffusé ce message auprès des consommateurs;

   2) de nombreuses études scientifiques ont montré également l'effet du choix des AG alimentaires dans la ration des animaux sur la qualité du profil lipidique des produits dérivés des animaux.

Chaque maillon de la filière alimentaire exprime des attentes que l'on peut résumer à travers celles :

-   Des agriculteurs : rechercher des têtes d'assolement pour allonger les rotations culturales, et ainsi limiter la pression des maladies et des ravageurs, faciliter la maîtrise des adventices, réduire l'usage des engrais azotés pour in fine rendre plus robuste leur système de production ;
-   Des éleveurs : optimiser les performances de leurs outils de production, en ayant une valorisation optimale de la ration, des animaux productifs et en bonne santé, mais aussi tirer davantage profit de leurs produits en cherchant à leur donner de la valeur ajoutée. C'est le cas par exemple des signes officiels de qualité comme l'agriculture biologique, le label rouge, les AOP, AOC, ou encore de filières telle que la filière "Bleu-Blanc-Cœur" (marque déposée) qui promeut les produits avec un meilleur profil nutritionnel au travers par exemple des cahiers des charges spécifiques.
-   Des consommateurs : consommer des aliments surs, sains, naturels avec un faible recours aux OGM, proches des bassins de production, et avec des avantages nutritionnels et santé avérés, l'ensemble s'inscrivant dans le concept d'alimentation durable.

Mais il en existe d'autres, d'un rayonnement important, exprimées par :

2

- Les institutionnels qui veulent limiter le recours aux importations de graines oléagineuses, aux engrais azotés et aux pesticides, et augmenter la production française et européenne de cultures d'intérêts ;
- Les entreprises de toute la filière alimentaire, en quête de différenciation et de valeur ajoutée dans un contexte économique tendu ;
- Les entreprises para-agricoles constitutives d'un large réseau de services et de produits.

B. Le potentiel d'une solution intégrée : la graine de lin

Si cette solution répond potentiellement bien à l'ensemble des attentes des filières, elle peut néanmoins être limitante sur certains points.

Dans un premier temps, sont exposés ci-après les potentiels d'intérêts qu'offre la graine de lin. Ensuite seront décrites ses limites.

1. Une solution pour les cultures

L'intégration de la culture du lin dans les rotations des cultures est intéressante d'un point de vue agronomique, tant en système conventionnel que biologique, et tant pour une stratégie de semis d'hiver que de printemps.

Cette culture contribue à

- diversifier les rotations et les allonger ;
- réduire l'usage des intrants : engrais azotés, produits phytosanitaires, potasse, phosphore...
- augmenter le rendement des cultures suivantes, grâce à la diversification et à l'effet structurant des racines au niveau du sol.

2. Une solution pour l'alimentation

Les animaux monogastriques, comme les volailles de chair et de ponte, ou les porcs charcutiers ont, par définition, un seul estomac. De par leur physiologie digestive, il existe une très bonne relation entre les AG Oméga 3 ingérés et ceux déposés dans les produits destinés à la consommation par l'homme (Lessire 2001).

Concernant les ruminants ou polygastriques, ils ont la particularité d'avoir quatre estomacs, dont l'un s'appelle le rumen. Celui-ci a la capacité de biohydrogéner une bonne partie des AG Oméga 3, c'est-à-dire que les Oméga 3 vont être saturés et isomérisés en d'autres acides gras saturés ou insaturés.

Heureusement, les ruminants sont naturellement des gros consommateurs d'Oméga 3, puisqu'on les retrouve en grande quantité dans l'herbe, ce qui leur permet d'en retrouver suffisamment à la sortie du rumen, et ainsi, une partie des Oméga 3 pourra également se fixer dans les tissus et aussi servir les différents métabolismes d'intérêts pour la santé de l'animal.

Mais les Oméga 3 hydrolysés puis dégradés dans le rumen en un grand nombre de différents AG aura également un effet intéressant sur la population bactérienne du rumen, en réduisant notamment les protozoaires et en favorisant la flore cellulolytique. Ceci va entraîner deux conséquences fortes intéressantes : la synthèse d'acide acétique, productrice d'hydrogène, se réduisant et celle d'acide propionique, consommatrice d'hydrogène, augmentant, vont induire d'une part, une réduction de la synthèse de novo des AG saturés présents dans le lait ou la viande et, d'autre part, une réduction des émissions de méthane entérique dans l'environnement.

C'est ainsi que l'objectif n'est pas nécessairement de protéger complètement les Oméga 3 de la dégradation ruminale, mais bien de trouver un juste équilibre, comme le permet une alimentation à base d'herbe.

Que ce soit pour les ruminants ou pour les monogastriques, on constate que leur alimentation est déficitaire en AGPIn-3 (utilisation massive de soja et de maïs sources d'Oméga 6 en alimentation animale, réduction de l'utilisation de l'herbe pour les ruminants). Pourtant, leur métabolisme a besoin d'Oméga 3 sous forme d'acide alpha-linolénique (ALA). Si certaines matières premières peuvent contribuer à son apport (herbe, luzerne, colza), il n'est cependant pas envisageable d'apporter les quantités sans passer par une source plus concentrée d'Oméga 3.

Dans cette optique, la graine de lin fait figure de leader compte tenu de sa teneur en lipides, et de son profil en acide gras semblable à celui de l'herbe, avec environ 55% des acides gras sous forme d'ALA.

Les graines de lin constituent donc une source importante d'énergie, sous forme de lipides, et d'acides gras Oméga 3 dont il est bon de rappeler que les avantages nutritionnels et santé connus chez l'homme sont applicables dans une certaine mesure à la nutrition et à la santé de l'animal.

a) Valeurs nutritionnelles

Les valeurs nutritionnelles de la graine de lin selon les tables alimentaires de l'INRA sont présentées dans le tableau ci-après, en comparaison à la graine de colza.

| | Graine de LIN | Graine de COLZA |
|---|---|---|
| Matière sèche (%) | 90,3 | 92,2 |
| Protéines brutes (%) | 22,6 | 19,1 |
| Matières grasses brutes (%) | 32,7 | 42,0 |
| Cellulose brute (%) | 9,2 | 8,2 |
| NDF | 22,1 | 17,6 |
| Cendres brutes (%) | 4,3 | 4,0 |
| Sucres (%) | 3,4 | 5,1 |
| Acide oléique (% des AG totaux) | 18,7 | 58,0 |
| Acide linoléique (% des AG totaux) | 14,7 | 20,5 |
| Acide $\alpha$-linolénique (% des AG totaux) | 54,2 | 9,8 |
| Energie brute (kcal/kg) | 5780 | 6310 |
| Energie digestible porc (kcal/kg) | 4190 | 5230 |
| Energie digestible porc / Energie brute | 72% | 83% |
| Energie métabolisable coq (kcal/kg) | 3390 | 4410 |
| Energie métabolisable coq / Energie Brute | 59% | 70% |
| Energie métabolisable ruminant (kcal/kg) | 3870 | 4470 |
| Energie métabolisable ruminant / Energie Brute | 67% | 71% |
| (Source : Table de composition et de valeur nutritive des matières premières destinées aux animaux d'élevage, INRA, 2002) | | |

On peut ainsi constater que la graine de lin est moins riche en lipides et en énergie que la graine de colza, et que cette énergie est moins bien valorisée par le porc, le coq et le ruminant. En effet, sur la base de l'énergie brute contenue dans la graine de lin, le porc, le coq et le ruminant ne valorisent que 72% de cette énergie sous forme d'énergie digestible par le porc, 59% sous forme d'énergie métabolisable par le coq et 67% pour le ruminant, en comparaison à 83%, 70% et 71% respectivement pour la graine de colza. Il faut ajouter que la graine de colza doit subir des traitements technologiques pour atteindre les valeurs citées ci-dessus (Leclercq et al, 1989).

Ainsi, si les graines de lin ont un potentiel nutritionnel intéressant, elles demeurent insuffisamment valorisées, en terme nutritionnel, par les différentes espèces animales, comme indiqué par les faibles valeurs en énergie digestible et métabolisable notamment.

Par ailleurs, une autre façon d'évaluer la digestibilité de la graine de lin consiste à mesurer la disponibilité de la matière grasse. En effet, la majeure partie de l'énergie contenue dans la graine est sous forme de matière grasse. Et comme on le verra plus loin, une limite à la digestibilité repose sur la faible accessibilité de la matière grasse de la graine. D'où l'intérêt de rechercher à évaluer cette digestibilité habituellement mesurée in vivo, en fermes expérimentales dédiées, par une mesure in vitro de la disponibilité de la matière grasse de la graine.

Ainsi, en fonction des traitements appliqués à la graine, une simple mesure de la matière grasse disponible (MGD) permet de comparer les traitements et de prédire la digestibilité, comme en témoignent les articles de Noblet et al., (2008) sur le porc, et Chesneau et al., (2009) sur le ruminant.

b) Mesure de la matière grasse disponible (MGD)

Cette méthode interne repose sur l'évaluation de la proportion de la matière grasse extraite dans un solvant au bout d'une durée prédéterminée. Ce dosage a pour objectif de mimer la libération, progressive et par étape, de la matière grasse dans les différents compartiments du tube digestif des animaux.

Brièvement, le dosage s'effectue en quatre étapes :

- Préparation de la matière première : elle consiste en un broyage grossier afin d'obtenir une granulométrie hétérogène à l'image des broyages réalisés en industrie de l'alimentation animale ;

- Extraction de la matière grasse : Elle consiste en la mise au contact de la matière première préalablement pesée avec un solvant d'extraction (ex : éther de pétrole) sous une agitation contrôlée pendant une durée prédéterminée, en l'occurrence de 10 minutes. Il est également possible de conduire cette phase d'extraction pendant des durées différentes, permettant ainsi de délivrer une cinétique de libération de la matière grasse.
- Séparation solide/liquide par filtration : Elle consiste en la filtration du broyat mis en solution dans le solvant afin de ne récupérer que la phase liquide dans un ballon sec et préalablement taré.
- Elimination du solvant de l'extrait et pesé du résidu sec : Elle consiste en une évaporation du solvant ayant solubilisé la matière grasse. Une fois évaporé, séché et refroidi, le ballon sera pesé. Ce cycle est répété jusqu'à l'obtention d'une masse constante.

C'est ainsi qu'il est envisageable de caractériser les graines à travers la MGD, dont les valeurs sont dépendantes des conditions opératoires fixées.

Cette matière grasse libérée, dite disponible car rapidement accessible, sera absorbée au travers de la paroi intestinale. Ainsi absorbée, elle pourra être valorisée par l'animal pour son propre métabolisme.

3. Une présence significative de facteurs antinutritionnels

Au-delà de leurs faibles valeurs de digestibilité, les graines de lin comportent des facteurs antinutritionnels qui peuvent limiter leurs utilisations. Ces facteurs antinutritionnels sont principalement les composés cyanogènes et les fibres totales dont les fibres solubles que constituent les mucilages.

Leur présence a pour conséquence des limites d'incorporation dans les aliments et des contre-performances techniques que l'on peut résumer à travers une difficulté réelle de compétitivité des graines de lin vis-à-vis des autres sources d'énergie et de matière grasse, particulièrement chez les espèces monogastriques.

Les principaux facteurs antinutritionnels rapportés sont les suivants :

Composés cyanogènes

La graine de lin se caractérise en effet par sa haute teneur en composés cyanogènes (5 g/kg de graine en moyenne). Cette teneur varie néanmoins en fonction des conditions pédoclimatiques et des variétés de lin. Deux diglucosides constituent l'essentiel des formes présentes dans la graine de lin à maturité : la linustatine (2 à 4 g/kg de graine) et la néolinustatine (1 à 2 g/kg de graine), issus de deux précurseurs monoglucosides. Sous l'action d'une enzyme présente dans la graine, mais aussi chez l'animal ou l'homme, à savoir la β-glucosidase, les composés cyanogènes libèrent de l'acide cyanhydrique (HCN), très volatil et très diffusible.

L'acide cyanhydrique ingéré diffuse rapidement dans l'organisme. L'ion cyanure qu'il contient est un poison cellulaire violent inhibant au moins 40 enzymes différentes parmi lesquelles la cytochrome oxydase servant au transport d'électrons dans la chaîne respiratoire pour former les molécules d'ATP.

Autrement dit, l'HCN a le même effet qu'une absence totale d'oxygène, faute de ne pouvoir l'utiliser. Il bloque la chaîne respiratoire et, à fortes doses, conduit inévitablement à la mort.

En effet, chez les animaux et l'homme, bien que l'on trouve des mécanismes de défense qui permettent d'évacuer l'HCN produit à faibles doses grâce à une élimination partielle de l'HCN absorbé par voie pulmonaire (du fait de son extrême volatilité), une partie de cet HCN, qui peut devenir non négligeable lors de plus forte absorption, est métabolisée selon plusieurs voies :

- La principale voie de détoxification réside dans la transformation de l'HCN en thiocyanates sous l'action de la transulfurase ou de la rhodanèse. Les thiocyanates ainsi produits dans le foie, la rate, les surrénales, le pancréas, la thyroïde et les reins sont éliminés par l'urine, la salive et la sueur.
- D'autres voies, plus accessoires, permettent son élimination par les urines ou par voie pulmonaire après hydrolyse et oxydation.

Ainsi, une consommation élevée de graines de lin chez l'homme (50g /jour) a révélé une augmentation du taux de thiocyanates dans les urines, toutefois non significative, mais couplée à une excrétion de créatinine multipliée par 3 (P<0,01 ) traduisant un dysfonctionnement rénal.

Il s'agit là d'une illustration des dommages que peut causer la consommation de graines de lin non détoxifiées, et aussi de l'énergie qui devient à la fois limitée du fait du mécanisme de blocage de la chaîne respiratoire et à la fois nécessaire à l'organisme pour détoxifier la diffusion de l'HCN dans l'organisme.

A date, la méthode de dosage des composés cyanogènes consiste en une méthode indirecte de dosage de l'HCN après ajout de β-glucosidase selon la méthode d'analyse normée EN 16160 d'avril 2012. Elle exprime ainsi la teneur en HCN en mg par kg de graine.

Mucilages

a) Description

Les mucilages de la graine de lin sont présents dans la pellicule de la graine. Ce sont des polysaccharides non amylacés hydrosolubles.

Les graines de lin contiennent des quantités importantes de mucilages qui augmentent la viscosité du contenu intestinal. Ils représentent jusqu'à environ 8 % du poids total de la graine de lin. Les mucilages se caractérisent par une forte capacité de rétention de l'eau.

Une abondante littérature scientifique fait état que ces mucilages peuvent avoir un effet délétère vis-à-vis de la santé digestive et des processus engagés par l'animal durant le transit des aliments et sont explicités ci-après.

On suppose que l'augmentation de la viscosité intestinale diminue la digestibilité des nutriments en interférant sur la diffusion des enzymes digestives vers leurs substrats et sur le mouvement du digestat au travers la lumière intestinale (Fengler et Marquardt, 1978, Longstaff et McNab, 1991).

Les polysaccharides visqueux peuvent également se complexer directement avec les enzymes digestives et diminuer leur activité (Ikeda et Kusano, 1983).

En outre, avec le flux accru d'éléments nutritifs non digérés l'activité microbienne est stimulée dans la partie inférieure de l'intestin, ce qui entraînerait une plus grande concurrence avec l'animal hôte pour les nutriments (Bedford, 1995; Choct et al., 1996).

Parmi les nutriments disponibles, la digestibilité des matières grasses peut être particulièrement affectée, car certaines espèces de microbes sont capables de déconjuguer les acides biliaires et d'altérer la formation de micelles, ce qui réduit la digestion de la matière grasse (Hymetond, 1985).

b) Méthodes d'évaluation

Les mucilages sont des composés complexes à doser, ce qui explique que plusieurs méthodes sont décrites dans la bibliographie, conduisant à une forte variabilité de résultats de dosage, et généralement développées dans les laboratoires de recherche. La méthode décrite par Elboutachfaiti et al. 2017 et ayant servi de référence repose sur une extraction des mucilages totaux telle qu'ainsi décrite :

Les polysaccharides hydrosolubles sont extraits des graines en l'agitant dans de l'eau distillée. Ensuite, le mucilage filtré est recueilli et centrifugé pour éliminer les particules insolubles. Le surnageant est purifié par ultrafiltration tangentielle contre de l'eau distillée. Finalement, la solution de rétentat est lyophilisée pour obtenir le mucilage de graines de lin.

Compte tenu de la faible accessibilité à cette méthode de dosage des mucilages, liée à son coût élevé et son délai d'analyse important, une méthode alternative plus simple et rapide à mettre en œuvre consiste à évaluer la capacité de rétention en eau des graines de lin. En effet, les mucilages ont cette propriété forte qui consiste à retenir de l'eau en quantité importante. Ainsi il devient plus aisé de mesurer indirectement les mucilages ou plus exactement les effets des mucilages, connus pour leur viscosité.

La méthode d'évaluation de la capacité de rétention en eau (CRE) des graines de lin, développée en interne, consiste à quantifier le volume d'eau retenu par les graines en l'état. Cette eau retenue correspond au volume d'eau qui ne s'écoule pas sous l'action de la gravité. Il s'agit donc de la quantité d'eau totale retenue par les fibres alimentaires solubles telles que les polysaccharides non amylacés de la graine, dont la valeur reste dépendante des conditions opératoires fixés et dont l'affinité avec l'eau est importante.

Brièvement, la détermination de la capacité en rétention en eau s'effectue à partir de 10 g de graine(s) (P.MP), précédemment broyée(s) grossièrement, ayant été préalablement saturée(s) en eau (80g d'eau à température ambiante, P.eau) pendant une période d'une heure. A l'issue de cette période de mise en saturation de(s) graine(s) en eau, il est permis à l'eau libre du mélange de s'écouler pendant une période de 10 minutes au travers d'une passoire (maille 1mm). Cette eau libre est ensuite pesée (P.eau.libre). Quand l'écoulement libre cesse, on dit que le mélange de graine(s) est à la capacité de rétention (CRE). La CRE (g/g MS) est exprimée selon la formule : [P.eau - P.eau.libre] / P.MP, puis ramené à la matière sèche de la graine, selon l'expression ci-dessous :

$$CRE\left(\frac{g}{g\,MS}\right) = \frac{P.eau - (Pf - Pi)}{\frac{100 - Humidité}{100} * P.MP}$$

La capacité de rétention en eau ainsi quantifiée permet d'avoir un critère prédictif de l'effet des mucilages qui peuvent interférer tant dans les procédés de traitement industriels des graines de lin ainsi que dans le processus de digestion mis en place par les animaux.

Les fibres

Les monogastriques en général ne sont pas bien équipés en termes de capacités digestives des fibres présentes dans leur alimentation. Les graines de lin en sont relativement pourvues avec 9,2% de cellulose brute et 22,1% de NDF (Neutral Detergent Fiber) d'après l'Inra.

Ces fibres représentent donc également une catégorie de facteurs antinutritionnels qu'il importe de souligner, notamment chez les jeunes monogastriques de rente tels que les poulets, les porcelets ou encore les poissons mais aussi pour les jeunes animaux domestiques tels que le chien et le chat.

Ces fibres ont non seulement une faible digestibilité, mais procurent également une moindre digestibilité des protéines et des autres nutriments, étant donné qu'elles vont jouer un rôle de « rempart » vis-à-vis des enzymes digestives des animaux en limitant leur accessibilité, ainsi qu'un rôle d'encombrement dans l'intestin limitant l'assimilation des nutriments.

En synthèse

Si les graines de lin ont un potentiel d'intérêts pour améliorer les paramètres de santé des animaux et de l'homme, ou encore pour améliorer la qualité nutritionnelle des produits d'élevage, il a été montré ci-dessus que ce potentiel est fortement limité par :

- La faible digestibilité à l'état brut de la graine de lin et de ses AG Oméga 3, du fait de la présence d'une paroi pectocelluosique complexe qui entoure la graine de lin. Ces composants sont donc d'une part faiblement accessibles et mal digérés par l'animal monogastrique et d'autre part, faiblement libérés et mal hydrolysés dans le rumen des ruminants. Par ailleurs, plus spécifiquement pour les monogastriques, d'autres composantes nutritionnelles intrinsèques à la graine telles que les fibres sont faiblement valorisables par l'animal.
- La présence de facteurs antinutritionnels tels que les composés cyanogènes, les mucilages et les fibres, qui sont naturellement présents dans la graine à l'état crue comme mécanisme naturel de défense des graines vis-à-vis de ses agresseurs.
- Dans la graine de lin, ce sont principalement les composés cyanogènes qui sont relevés, mais on peut aussi citer les fibres et plus particulièrement les fibres solubles telles que les mucilages compte tenu de leur capacité de rétention en eau et de leur fort pouvoir de viscosité impactant le processus digestif des jeunes animaux.

L'enjeu est donc d'exprimer au mieux le potentiel de la graine de lin en favorisant sa valorisation nutritionnelle et métabolique tout en limitant les facteurs antinutritionnels.

## PROBLEME TECHNIQUE A RESOUDRE

### A. L'insertion des graines de lin : leviers et limites

L'usage des graines de lin en alimentation est actuellement présent, mais relativement peu développé en raison de barrières techniques et économiques.

Sous l'angle technique, l'enjeu est de réduire les facteurs antinutritionnels et d'améliorer les valeurs de digestibilité en nutriments (énergie, protéine, matière grasse, etc.) des graines, et ainsi améliorer le ratio bénéfice / risque lié d'une part à l'apport d'Oméga 3, et d'autre part à celui d'HCN et autres fibres, peu digestibles.

Sous l'angle économique, parce que les caractéristiques techniques obtenues restent insuffisantes, l'usage de la graine de lin dans l'alimentation des animaux n'est pas développé, et n'existe que dans de rares situations où les éleveurs bénéficient de meilleurs résultats en termes de santé des animaux et/ou de meilleurs prix sur les produits qu'ils vendent du fait d'une meilleure composition nutritionnelle.

Aujourd'hui, le défi à relever est donc de rendre l'usage de la graine de lin économiquement viable.

Parmi les leviers à l'usage plus important des graines de lin en alimentation, deux voies principales existent : la sélection végétale et surtout les procédés technologiques de traitements des graines.

### i. La sélection variétale

La sélection de la graine de lin oléagineuse s'exerce sur des critères principalement agronomiques, c'est-à-dire sur des critères de rendement, de précocité, de résistance à la verse, etc. Elle s'exerce aussi sur des critères liés à l'usage des graines, et à date les critères de qualité de la graine qui s'inscrivent dans les programmes de sélection sont relatifs :

- à la teneur en huile de la graine et à son extractabilité, pour les triturateurs qui vont chercher à augmenter les rendements de séparation de l'huile du tourteau, et dans une autre mesure ;
- à la teneur en huile de la graine et à la proportion d'Oméga 3 dans cette huile, pour les entreprises qui vont chercher à augmenter la part d'Oméga 3 par kg de graine de lin et gagner en compétitivité.

Mais jusqu'alors, la sélection variétale sur le lin oléagineux ne s'est guère intéressée aux facteurs antinutritionnels au point de mettre sur le marché des variétés spécifiques à teneurs réduites en composés cyanogènes ou en mucilages. Elle ne s'est pas non plus intéressée à rendre les Oméga 3 plus digestibles ou disponibles.

C'est ainsi que l'on peut considérer que le levier génétique n'a pas encore fait ses preuves en terme d'efficacité pour améliorer le ratio bénéfice/risque entre la quantité d'Oméga 3 digestibles et la quantité de facteurs antinutritionnels, sinon à travers une plus grande concentration en huile et en Oméga 3 de certaines variétés.

## ii. Les procédés technologiques

En parallèle au travail de sélection variétale, de nombreux procédés technologiques ont été testés pour réduire ou éliminer les facteurs antinutritionnels, et améliorer les valeurs nutritionnelles et de digestibilités des graines.

Les différents procédés jusqu'alors testés ont trait à des approches mécaniques, ou thermiques, ou thermomécaniques, ou enzymatiques.

Il faut retenir que la bibliographie sur les procédés technologiques de traitement des graines de lin est très hétérogène, partielle, informative et le plus souvent ancienne. Nombre de travaux publiés ont cherché à comparer une technologie a un témoin non traité, ou bien des technologies en comparaison deux à deux, en s'appuyant sur des techniques d'évaluation in vitro souvent différentes, et/ou des études in vivo en conditions variables.

De plus, les résultats partiels décrits dans la littérature sont anciens et n'ont pas intégré l'évolution des technologies depuis 30 ans. Et ils présentent uniquement des comparaisons entre technologies, sans envisager l'optimisation desdites technologies ou mieux encore des combinaisons de technologies.

C'est pourquoi, la bibliographie actuelle est exploitable dans une certaine limite mais ne permet pas de tirer des conclusions claires sur les technologies et les paramètres correspondants à utiliser, notamment dans le but d'une mise en œuvre industrielle.

D'autre part, les études in vivo, plutôt anciennes en général, ont pour beaucoup été réalisées sur des animaux de génétique moins productive et des aliments moins adaptés à des systèmes alimentaires actuels.

En effet, la sélection génétique animale dont l'indice de consommation alimentaire progresse en moyenne de 2,5% par an, est réalisée pour une production mondiale, avec des aliments à base de maïs et de soja, classiquement utilisés.

Ceci ne permet pas une valorisation optimale des matières premières plus diversifiées en source d'énergie et de matières grasses, telles que les graines de lin.

C'est pourquoi les effets des FAN et des technologies peuvent probablement s'amplifier à partir des modèles d'évaluation in vivo actuels. Parce que dans ce contexte, il devient de plus en plus difficile de rendre performantes les graines de lin actuelles.

C'est en ce sens que, bien que de nombreux traitements technologiques aient été testés par le passé, ils méritent pour certains d'entre eux d'être réétudiés dans les contextes techniques et économiques actuels.

Les principaux traitements jusqu'alors testés sur lesdites graines de lin sont les suivants :

## 1. Traitements mécaniques

Les traitements mécaniques « classiques » (broyage, micronisation) détruisent la structure initiale des graines en rompant les parois cellulaires. Ces traitements permettent la division en particules plus petites par broyage grossier, (particules de 5 mm) ou broyage fin (grille de 2-3 cm), c'est-à-dire par écrasement, éclatement (broyeur à marteau) ou cisaillement (broyeur à couteaux ou cylindre).

La taille des particules obtenues et leur endommagement déterminent le degré d'exposition des constituants biochimiques aux agents digestifs (microbes du rumen ou enzymes intestinales) et donc la vitesse de leur digestion. La structure tissulaire est conservée en grande partie. Néanmoins, le broyage à la grille de 3 mm, voire 1 mm, suivi d'une agglomération détruit la structure des tissus.

Alors que la digestibilité de la graine de lin peut être améliorée par ces traitements mécaniques, l'impact est nul sur les facteurs antinutritionnels.

Un autre traitement mécanique consiste à dépelliculer la graine de lin. Le dépelliculage de la graine permet d'éliminer les pellicules qui contiennent exclusivement de la cellulose, des fibres, et certains facteurs antinutritionnels tels que les mucilages et de concentrer certains nutriments comme la matière grasse, les Oméga 3 et les protéines.

Mais peu de procédés de dépelliculage de la graine de lin ont été développés, en raison des difficultés techniques d'industrialisation et de rentabilité économique.

## 2. Traitements thermiques

Au sein des traitements thermiques, on recense la granulation, le toastage, le floconnage et l'autoclavage. L'action de la chaleur se conjugue à celle d'une hydratation externe sous forme d'eau ou de vapeur à pression réduite (cuisson humide et longue à température modérée) avec un effet supérieur du toastage et de l'autoclavage par rapport au floconnage et à la granulation.

Ces procédés peuvent obtenir des effets positifs sur la réduction des teneurs en HCN, dans certaines conditions seulement, mais n'ont que de faibles effets sur la valeur énergétique de la graine notamment, et ne permettent pas de limiter l'effet négatif des fibres. Ceci explique qu'ils ne sont pas répandus en nutrition animale, faute de rentabilité.

## 3. Traitements thermomécaniques

Parmi les traitements thermomécaniques appliqués à la graine de lin, on peut en évoquer deux principalement : la trituration et le cuisson-extrusion.

La trituration des graines oléagineuses est la première étape du procédé d'obtention des huiles alimentaires, la seconde étape étant le raffinage. La trituration de la graine de lin est généralement effectuée dans le but de séparer par pressage à froid, d'une part, l'huile de lin destinée davantage aux marchés de la peinture (et aux rares destinations alimentaires du fait de sa forte oxydabilité) et, d'autre part, le tourteau de lin destiné aux marchés de l'alimentation animale, comme tous les tourteaux d'oléagineux.

Il est généralement admis que le tourteau de lin ne subit pas d'extraction au solvant visant à extraire l'huile résiduelle après l'étape de pressage à froid. Ainsi, ce tourteau est encore composé d'environ 13% de matières grasse, laquelle se compose de la même proportion d'Oméga 3 que dans la matière grasse des graines.

Mais l'inconvénient majeur de ce procédé réside dans le fait que d'une part le tourteau destiné à l'alimentaire est fortement concentré en composés cyanogènes, sans pour autant rendre les Oméga 3 très digestibles.

D'autre part, l'huile, qui peut dans certains cas être destinée à l'alimentaire, n'est plus accompagnée des antioxydants hydrophiles de la graine, ce qui la rend très oxydable, et ce d'autant plus que les acides gras Oméga 3 sont très insaturés, donc à forte réactivité oxydative. C'est d'ailleurs ce qui a valu à l'huile de lin des limitations drastiques d'utilisation pour un usage partiel en alimentation humaine.

La cuisson-extrusion, quant à elle, est une opération complexe qui équivaut à plusieurs opérations unitaires : malaxage, cuisson et mise en forme. Chacune de ces opérations peut être modulée, en fonction de la matière à transformer et du produit à obtenir, par le choix approprié des paramètres de commande de la machine. Entraînée par les vis sans fin, la matière est soumise pendant un temps très court (20 à 60 s) à de hautes températures (100 à 200°C), à de fortes pressions (50 à 150 bars), et à un cisaillement plus ou moins intense. Sous l'action de ces paramètres physiques, la matière subit des modifications physico-chimiques et une homogénéisation. Sa sortie à travers la filière lui donne sa forme finale. La chute brutale de la pression lors de l'extrusion déclenche une vaporisation instantanée de l'eau présente, qui peut entraîner une expansion caractéristique du produit.

Les premiers cuiseurs-extrudeurs étaient mono-vis. Les matériels de seconde génération sont des appareils bi-vis (comportant deux vis parallèles, tangentes ou copénétrantes, tournant dans le même sens ou en sens inverse) ; ils sont plus souples d'emploi et permettent en particulier de travailler avec une plus grande régularité.

Ce procédé, comme en témoigne le brevet européen n°1 155 626, peut permettre dans certaines conditions la détoxification d'une partie de l'acide cyanhydrique et peut améliorer la digestibilité des graines, mais les résultats restent variables et pas toujours reproductibles, si les nombreux paramètres en jeux ne sont pas contrôlés : type de machine (mono-vis / bi-vis), contraintes mécaniques (type de vis, écluse, vitesse, filière...), contraintes thermiques (eau, vapeur, durée...), contraintes de présentation (filière pour farines, croquettes...).

Les procédés thermomécaniques ont tendance à se développer pour ce type d'usage mais il est nécessaire de bien les maîtriser pour exploiter leur potentiel.

## 4. Traitements enzymatiques

Tous les animaux secrètent des enzymes pour digérer les aliments. Cependant, le processus digestif de l'animal n'est pas efficace à 100 %. Par exemple, les porcs et les volailles ne digèrent pas 15 à 25% des aliments qu'ils ingèrent. L'apport d'enzymes exogènes dans l'alimentation des animaux, et plus particulièrement des monogastriques, permet d'améliorer la digestibilité des amidons, protéines, fibres et minéraux. Cet apport enzymatique permet de meilleures performances de croissances ainsi qu'une baisse des rejets dans l'environnement.

La supplémentation enzymatique est réalisée à partir d'une enzyme commerciale isolée, sélectionnée sur quelques activités enzymatiques. Concernant spécifiquement la graine de lin, peu d'essais ont cherché à montrer l'intérêt de cette technique comme voie d'amélioration de la valeur nutritionnelle des graines de lin, probablement du fait que cette graine restera à des niveaux faibles d'incorporation dans les aliments alors que ses fibres sont spécifiques. C'est pourquoi cette approche enzymatique ne s'est pas encore révélée comme étant techniquement efficace et économiquement viable.

## 5. Traitements appliqués par les acteurs économiques des filières d'élevage

Le constat, dans les filières d'élevages d'aujourd'hui, repose sur le fait que :

1- les variétés produites n'ont en général pas de caractéristiques propres en termes de compositions au-delà des teneurs en huile et en Oméga 3, sinon des caractéristiques agronomiques ;

2- les procédés technologiques d'usages des graines en élevage sont soit basiques puisqu'ils font appel aux seuls traitements mécaniques de broyage, de trituration pour un usage sous forme d'huile et de tourteaux, ou aux traitements thermiques de granulation, soit partiellement élaborés puisqu'ils font appel aux traitements thermomécaniques de cuisson-extrusion pour des objectifs de détoxification partielle, essentiellement.

En effet, les usages actuellement présents reposent soit sous la forme de graine broyée, granulée ou extrudée, soit sous forme d'huile. Mais compte tenu des limites exposées ci-dessus pour chacun de ces traitements, l'usage de la graine de lin en alimentation reste peu développé, expliqué notamment par un manque de viabilité technique et économique, et ce malgré les avantages des Oméga 3 sur la santé.

## iii. En synthèse

Certains avantages techniques peuvent être apportés par la voie de la génétique. C'est l'exemple de la concentration en Oméga 3 des graines. Ou par la voie du choix de graines. C'est l'exemple de certains facteurs antinutritionnels tels que les composés cyanogènes et les mucilages notamment. D'autres peuvent l'être par la voie des procédés de transformation tels que le dépelliculage qui permet de se défaire des mucilages contenus dans les pellicules, ou des procédés thermiques consistant à venir à bout de l'HCN.

Enfin, des procédés mécaniques comme le broyage participent à l'amélioration de la valeur nutritionnelle des graines, tout comme des procédés thermiques tel le toastage et la granulation, et/ou des procédés thermomécaniques telle la trituration ou la cuisson extrusion.

Séparément donc, chacune de ces voies : sélections génétiques, choix de graines ou procédés technologiques rapportées dans la bibliographie, propose des axes d'amélioration bien connus sur la limitation ou l'élimination des facteurs antinutritionnels d'une part et/ou sur l'amélioration des valeurs de digestibilité / dégradabilité des graines d'autre part, mais aucune d'entre elles ne se suffit pour être techniquement complète et économiquement imparable en termes de valorisations technico-économiques par les animaux.

Dans un marché historique où le choix des sources végétales d'énergie et/ou de lipides présentes dans les régimes alimentaires des animaux et de l'homme repose sur des critères essentiellement économiques, la place des graines de lin au regard des limites existantes a été réduite à néant, ou aux rares exceptions de leurs avantages nutritionnels, au profit surtout des sources énergétiques glucidiques telles que les céréales, et des sources lipidiques telles que les huiles de palme, de soja, de colza, de coprah, de tournesol, etc., les graines de colza, de soja, etc.

Dans un marché nouveau où la tendance n'est pas uniquement de produire des viandes ou des œufs à un prix compétitif, mais aussi de répondre à des attentes de consommateurs l'enjeu devient maintenant d'avoir des sources d'énergie et de lipides compétitives mais aussi des sources d'acides gras essentiels digestibles, tracées, sécurisées et produites localement.

## B. Un contexte favorable mais insuffisant

Pour réussir à réintroduire durablement les graines de lin dans les sols, dans les auges et les gamelles, et dans les assiettes, il y a des éléments de contexte favorables tels que des incitations « politiques » (plan "Ecophyto", plan "EcoAntibio", etc.), des atouts agronomiques (rendement des céréales suivantes, moins d'usages d'intrants...), des réponses potentielles à de nombreuses attentes agricoles (santé du sol et des animaux, valeur ajoutée de la production, pérennité économique...) et sociétales (nutrition santé, local, biodiversité, environnement...).

Mais cet environnement propice ne suffit pourtant pas à renforcer l'usage des graines de lin si les systèmes de production des végétaux et des animaux ne sont pas techniquement robustes et économiquement viables.

Il doit pour cela être accompagné de la mise au point des technologies les plus efficientes, les plus sûres et les plus robustes au niveau technique et économique, pour être apporteur des meilleures solutions aux filières agricoles et d'élevage, et aux autres usages tels que pour les animaux domestiques, ou encore directement pour l'homme.

En somme, un intérêt particulier consiste à améliorer le ratio de la quantité d'Oméga 3 digestible (ou disponible) sur la quantité de FAN résiduels, ou inversement, quel que soit l'individu qui consomme ces graines de lin.

La présente invention vise donc à atteindre cet objectif.

## RESUME DE L'INVENTION

Ainsi, la présente invention se rapporte à un procédé de traitement de graines de lin (*Linum usitatissimum*) en vue d'améliorer leur valorisation à titre d'aliments, notamment pour les animaux, caractérisé par le fait qu'il comporte les étapes successives suivantes :

a) Utilisation de graines de lin à la condition que ces graines présentent :

- une teneur en acide cyanhydrique inférieure à 250 mg par kilogramme de matière brute ;
- une teneur en matière grasse et/ou en acides gras Oméga 3, supérieure aux valeurs indiquées dans le tableau ci-dessous :

| Composante nutritionnelle hautement valorisable | Unité | Teneur |
|---|---|---|
| Matière grasse | g/100g brut | > 38 |
| Oméga 3 | % des AGT | > 54 |
| Oméga 3 | g/100g brut | > 20 |
| (AGT = acides gras totaux) | | |

et, uniquement lorsque lesdites graines sont destinées à l'alimentation d'espèces monogastriques, une valeur en capacité de rétention d'eau ou une teneur en mucilages, ainsi qu'une teneur en cellulose brute et/ou en fibres insolubles dans les détergents neutres (NDF), ces valeur/teneurs étant inférieures à celles indiquées dans le tableau ci-dessous :

| Composante nutritionnelle faiblement valorisable | Unité | Teneur |
|---|---|---|
| Cellulose brute | g/100g brut | < 11 |
| NDF | g/100g brut | < 22 |
| Mucilages | g /kg brut | < 4.5 |
| Capacité de rétention en eau | g/g sec | < 4.5 |

b) Mélange, dès lors qu'il y a au moins deux matières premières de nature et/ou de qualité différentes puis fractionnement, ou fractionnement puis mélange, desdites graines issues de l'étape a) jusqu'à ce que les téguments et amandes desdites graines se rompent ;

c) Mise en œuvre d'une étape thermique de préparation des graines issues de l'étape b) avec de la vapeur et/ou un liquide à base d'eau, jusqu'à obtention d'une température comprise entre 30 et 90° C et une humidité supérieure à 10%, préférentiellement 15%, la durée de cette préparation étant supérieure à 2 minutes, préférentiellement 15 minutes;

d) Mise sous pression minimale de 10 bars, des graines ou du mélange issus de l'étape c), pendant une durée supérieure à 10 secondes, jusqu'à l'obtention d'une température supérieure à 80°C, préférentiellement comprise entre 100 et 150°C;et/ou d bis) Chauffage des graines ou du mélange issus de l'étape d), respectivement de l'étape c), pendant une durée minimum de 15 minutes, préférentiellement de 30 minutes à 2 heures, à une température supérieure à 80° C, préférentiellement entre 90 et 150°C.

Selon d'autres caractéristiques non limitatives et avantageuses de l'invention :

- l'étape thermique c) de préparation est réalisée en présence d'au moins une enzyme exogène identifiée parmi les familles suivantes : arabinofuranosidases, béta-glucanases, cellulases, glucoamylases, pectinases, pectine methyl estérases, phytases, protéases, xylanases et, préférentiellement, xylanases, beta-glucanases et pectinases, ladite enzyme exogène ayant préalablement été ajoutée aux graines ou au mélange. ;

- à l'étape thermique c) de préparation en présence d'enzyme exogène, on se place à une humidité supérieure à 15%, préférentiellement 25%, et on fait durer la préparation pendant au moins 15 minutes, préférentiellement 60 minutes ;

- lors de la mise en œuvre de ladite étape thermique de préparation, on procède à une agitation du mélange ;

- lorsque l'on procède au mélange puis à un fractionnement, on procède à un nouveau mélange après ledit

EP 3 713 424 B1

fractionnement ;

- on poursuit ledit fractionnement jusqu'à ce qu'au moins 90% des graines aient une granulométrie inférieure à 2000 micromètres, de préférence inférieure à 1500 micromètres ;
- on interrompt la mise en œuvre de l'étape d), respectivement d bis) dès lors que la teneur en HCN desdites graines a une valeur inférieure à celle indiquée dans le tableau ci-dessous et que la teneur en MGD a une valeur supérieure à celle indiquée dans le tableau ci-dessous :

| Critères d'appréciation du traitement | Objectif |
|---|---|
| HCN (mg/kg) | < 30 |
| MGD (%) | > 65 |

- à la suite de l'étape a), ou en amont, on procède à un triage des graines selon un critère choisi parmi la taille, le poids, la forme, la densité, un paramètre aérodynamique, colorimétrique ou électrostatique ;
- à la suite de l'étape a), on procède au dépelliculage des graines et on utilise l'une ou l'autre des fractions, préférentiellement lorsque le dépelliculage est caractérisé par une concentration d'au moins 3% de matière grasse dans la fraction dite amande, de préférence au moins 5% ;
- à la suite de l'étape a) ou b), on procède à la trituration des graines, entières ou dépelliculées, et on utilise le tourteau, préférentiellement lorsqu'il contient au moins 8% de matière grasse ;
- on mélange auxdites graines de lin au moins une autre matière première choisie dans le groupe constitué par les graines protéagineuses, les céréales, les co-produits de céréales et protéagineux, les sources de glucides simples et complexes, les tourteaux d'oléagineux et les autres co-produits d'oléagineux ;
- lors de la mise en œuvre d'au moins une desdites étapes, on ajoute auxdites graines au moins une matière antioxydante ;
- il comporte une étape, après la mise en œuvre de l'étape d), respectivement d bis), au cours de laquelle on refroidit lesdites graines ;
- on procède finalement au conditionnement, au transport et au stockage desdites graines à l'abri de la lumière ;
- on procède finalement au conditionnement desdites graines sous vide au moins partiel, ou par remplacement au moins partiel de l'air par un gaz inerte.

## DESCRIPTION DETAILLEE DE L'INVENTION

Dans la description qui suit, les modes de réalisation, exemples, essais et études dans lesquels la teneur en acide cyanhydrique est supérieure à 250mg par kilogramme de matière brute ne relèvent pas de l'invention et ne sont donnés qu'à titre illustratif.

Le procédé objet de la présente invention consiste en une combinaison d'étapes :

Etape a) : utilisation de graines particulières

Utilisation de graines de lin (Linum Usitatissimum)

A teneur élevée en au moins une composante nutritionnelle, parmi la matière grasse et/ou les Oméga 3. Sont considérées comme des graines sélectionnées, ou retenues, à teneur élevée en matière grasse et/ou en Oméga 3 celles dont les teneurs sont supérieures aux seuils ci-dessous :

| Espèce | Composante nutritionnelle hautement valorisable | Unité (sur brut) | Plage de variation | | Graines à teneur élevée |
|---|---|---|---|---|---|
| | | | Minimum | Maximum | |
| Graine de lin | Matière grasse (MG) | % | 30 | 50 | > 38 |
| | Oméga 3 (ALA) | % AG totaux | 3 | 72 | > 54 |
| | Oméga 3 (ALA) | % | 1 | 36 | > 20 |

Préférentiellement, les graines à teneurs élevées contiennent au moins 40% de MG, voire 42% ; et 56% d'ALA dans les AG totaux, voire 58%.

La sélection de la graine de lin sur la base de sa qualité nutritionnelle conduit à avoir des impacts sur les étapes technologiques mises en œuvre par la suite. Les critères retenus ici pour la sélection de la graine de lin sont la teneur en Oméga 3 sous forme d'acide $\alpha$-linolénique (- ou ALA -) ainsi que la teneur en matière grasse.

Le choix de l'usage de graines de lin riches en l'un et/ou l'autre de ces critères conduit à un impact sur les étapes suivantes avec comme résultat, une hausse de la digestibilité et/ou à la détoxification, ainsi que cela est décrit ci-après.

Cela est illustré ci-après par l'exemple d'une graine ou de la formulation d'un mélange élaboré à base de graines de lin où la teneur en ALA est fixée à 205g/kg :

- Sélection des graines de lin par la teneur en ALA

Plus la teneur en ALA dans la graine de lin est élevée, moins l'incorporation nécessaire à l'élaboration du mélange à 205g d'ALA est important. Ainsi, cette moindre incorporation conduit à un niveau plus faible de matière grasse apportée. Dans le processus thermomécanique mis en place, un moindre apport en matière grasse conduit à une plus forte résistance mécanique de la graine à traiter. Il en résulte une hausse de la digestibilité lue à travers l'augmentation de la matière grasse disponible (MGD), expliquée par davantage de forces mécaniques entraînant plus de pression et de température. En effet, ces dernières favorisent la rupture des parois cellulaires et des membranes plasmiques conduisant à une plus forte libération de la matière grasse contenue dans les vacuoles lipidiques. Ainsi, plus la teneur en ALA des graines de lin est élevée, plus la MGD des graines de lin traitées est importante, et donc plus elles seront rendues digestibles pour les animaux.

- Sélection des graines de lin par la teneur en MG

La teneur en MG de la graine influence de manière importante la teneur en ALA totale de la graine. Ainsi, plus la teneur en MG est importante, et pour un même objectif de 205g, moins il est nécessaire d'utiliser des graines de lin. Cette moindre incorporation réduit significativement l'apport en mucilages présentes dans les graines. Ainsi, tel que décrit précédemment, une moindre présence en mucilages résulte en une hausse de la digestibilité des nutriments par les enzymes présentes (accessibilité au substrat, diffusion des enzymes, résistance mécanique). Ainsi, plus la teneur en MG des graines de lin est élevée, plus l'efficacité des enzymes est préservée.

Et, uniquement lorsque lesdites graines sont destinées à l'alimentation des espèces monogastriques, à teneur faible en capacité de rétention d'eau ou en deux composantes nutritionnelles faiblement valorisables que sont les fibres insolubles dans les détergents neutres (NDF) et les mucilages. Sont considérées comme des graines sélectionnées, ou retenues, à teneur faible en capacité de rétention d'eau ou en composante nutritionnelle faiblement valorisable celles dont les teneurs et/ou valeurs sont inférieures aux seuils ci-dessous :

| Composante nutritionnelle faiblement valorisable | Unité (sur brut) | Plage de variation | | Graines utilisées |
|---|---|---|---|---|
| | | Minimum | Maximum | |
| Cellulose brute | % | 3.5 | 15.3 | < 11 |
| NDF | % | 12.1 | 30.9 | < 22 |
| Mucilages | g /kg | 2.2 | 5.8 | < 4.5 |
| Capacité de rétention en eau | g/g MS | 2.8 | 5.9 | < 4.5 |

Préférentiellement, les graines à teneurs faibles contiennent au plus 19% de NDF, voire 17% ; 4g/kg de mucilages, voire 3,5% ou 4g de rétention en eau par g de MS, voire 3,5.

Outre l'impact délétère qu'ont les fibres solubles sur les processus digestifs des animaux, ils peuvent aussi altérer le processus technologique mis en œuvre pour augmenter la digestibilité des graines -telle que la matière grasse disponible - et pour réduire, voire supprimer, leurs teneurs en facteurs antinutritionnels. Les modes d'actions analogues sont explicités ci-après :

L'impact de ces fibres solubles est multiple et se caractérise par une augmentation de la viscosité du fait de la forte affinité entre les fibres solubles et l'eau, ce qui induit d'une part une moindre accessibilité du substrat (rôle de barrière) et une altération de la diffusion des enzymes ; et d'autre part une plus forte résistance mécanique limitant la diffusion de la température, de l'eau, ainsi que la mise en contact enzyme / substrat. Les fibres solubles des graines de lin se caractérisent particulièrement par la teneur en mucilages, et leurs propriétés hydrophiles s'évaluent par la capacité de rétention en eau (CRE).

Et une teneur en acide cyanhydrique inférieure à 250 mg par kilogramme de matière brute ;

## Etape b) : mélange et fractionnement des graines

Choix au moins d'une technologie mécanique de mélange, dès lors qu'il y a au moins deux matières premières de nature différente (c'est à dire dont l'une au moins n'est pas constituée de lin) et/ou de qualité différente, et d'une technologie mécanique de fractionnement des graines paramétrée de telle sorte qu'elles permettent, pour la première, de réaliser un mélange homogène des graines de lin et d'éventuelles matières premières additionnelles, et pour la seconde, de rompre les téguments et les amandes des graines afin de rendre plus accessible les nutriments aux enzymes (endogènes ou exogènes et digestives) et, ainsi, améliorer la digestibilité et la détoxification des graines.

Une préférence consiste à pré-mélanger les matières avant leur fractionnement, mais il est aussi envisageable d'opérer d'abord par le fractionnement séparé des matières puis de les mélanger, mais aussi d'effectuer deux opérations de mélange, l'une avant le fractionnement, l'autre après.

Les sollicitations mécaniques simples et/ou combinées mises en œuvre pour remplir ces fonctions peuvent être notamment obtenues par impact, coupe, compression, cisaillement ou abrasion.

Le fractionnement des graines est caractérisé par la mesure granulométrique qui détermine la taille des particules issues du procédé. La taille maximale de 90% des particules issue de ladite technologie mécanique est préférentiellement inférieure à $2000\mu m$ et encore plus préférentiellement inférieure à $1500\mu m$.

Cette dimension est atteignable grâce par exemple à un broyeur à marteaux horizontal suivant les paramètres ci-dessous, pour un équipement d'une capacité de 10 t/h et un moteur de 200 KW, vitesse de rotation : 2800 tr/min et taille des grilles de 3 mm. Cette dimension peut être atteinte également avec d'autres équipements usuels tels que les broyeurs ou concasseurs à marteaux et à cylindres, les broyeurs à palettes.

Enfin d'autres technologies existent et peuvent également remplir cette fonction : broyeur à meule, broyeur à disques, broyeur à broches, broyeur à tête de coupe, broyeur à billes ou boulets, broyeur ou concasseur à lame, impacteur ou broyeur à impact, etc.

## Etape c : Traitement thermique préparatoire

Cette étape, consiste à choisir au moins une technologie thermique paramétrée de telle sorte qu'elle respecte les caractéristiques suivantes :

## A. Première possibilité : Etape de préparation hydrothermique

Cette étape a pour double objectif d'initier la détoxification des graines de lin en provoquant une activation des enzymes endogènes et de faciliter l'étape thermique suivante en améliorant les capacités de conduction thermique.

Cette étape consiste à imprégner les graines de vapeur d'eau et/ou d'un liquide avec de l'eau, dans le but d'atteindre sur les graines préalablement fractionnées, une température entre 30 et 90°C pendant une durée supérieure à 2 minutes et une humidité supérieure à 10%.

De façon préférentielle, il convient d'imprégner les graines pendant une durée supérieure à 5 minutes, ou 15 minutes voire 30 minutes, et préférentiellement inférieure à 4 heures, voire 8h, sans dépasser 24h pour une humidité supérieure à 12%, voire 15%, et inférieure préférentiellement à 40%, sans excéder 60%.

Et de manière très avantageuse, il convient d'imprégner les graines pendant une durée supérieure à 1 heure, voire 2 heures, pour une humidité supérieure à 18%, voire 20% ou encore 25%.

L'apport d'eau peut être réalisé lors de cette étape et/ou lors de l'étape de mélange.

L'acide cyanhydrique est le produit de la dégradation des composés cyanogènes (linamarine, linustatine, neolinustatine) par la beta-glucosidase. Les conditions de température, de durée et d'humidité mentionnées ci-dessus permettent une action enzymatique efficace. Rappelons également que les fibres solubles augmentent la viscosité du fait de la forte affinité entre les mucilages et l'eau, et peuvent ainsi limiter l'efficacité de ce processus enzymatique (accessibilité au substrat, diffusion des enzymes, résistance mécanique). En dessous de 30°C, les enzymes ne sont pas ou très peu actives, et au-delà de 90°C, la plupart d'entre elles sont désactivées par la chaleur, voire même au-delà de 60°C.

Les équipements en mesure d'effectuer cette étape sont, de manière non exhaustive : un préparateur, un pré-conditionneur et conditionneur, un cuiseur, un mélangeur, un toasteur, un imprégnateur vapeur, un maturateur.

## B. Deuxième possibilité : Etape de préparation hydrothermique et enzymatique

Cette étape de préparation consiste à appliquer les mêmes conditions de préparation telles que décrites à la rubrique première possibilité. Elle s'en distingue simplement par le fait qu'on met en activité au moins une enzyme exogène, non présente dans les graines de lin, pouvant être apportée notamment en tant qu'auxiliaire technologique (extrait d'enzymes...), à partir d'additifs, de matières premières brutes ou fermentées, etc, et ajoutée au procédé à l'une des étapes préalables, ou lors de celle-ci.

Les caractéristiques de température sont alors choisies de telles sortes qu'elles correspondent aux plages d'activités des enzymes retenues, mais demeurant entre 30 et 90°C. Les caractéristiques de durée et d'humidité requises sont les mêmes que celles décrites plus haut, considérant néanmoins que ces enzymes exogènes requièrent des conditions plus favorables que les enzymes endogènes, du fait qu'elles ne sont pas spatialement et temporellement aussi proche de leurs substrats.

C'est en ce sens qu'il convient d'adapter les conditions d'imprégnation, de telle sorte que l'imprégnation dure au moins 15 minutes, préférentiellement 60 minutes, et préférentiellement inférieure à 4 heures, voire 8h, sans dépasser 24h pour une humidité supérieure à 15%, préférentiellement 25%, et inférieure préférentiellement à 40%, sans excéder 60%.

L'enzyme (ou les enzymes) à introduire appartient (ou appartiennent) aux familles des arabinofuranosidase, béta-glucanases, cellulases, glucoamylase, pectinases, pectine methyl esterase, phytase, protéases, xylanases, galactosidases, et de façon préférentielle, aux xylanases, beta-glucanases et pectinases.

Elle aura (ou elles auront) été préalablement choisie(s) pour leur efficacité à hydrolyser les liaisons chimiques particulières que l'animal n'est pas en mesure d'effectuer du tout ou pas complètement ou pas suffisamment rapidement. La cible sera notamment de dégrader des glucides qui ne sont pas ou mal hydrolysés chez l'animal pour permettre une meilleure accessibilité des autres constituants de la graine par les enzymes digestives, laquelle accessibilité peut s'expliquer, entre autres, par la décomplexation des glucides avec les composés nutritionnels ou antinutritionnels

Les équipements en capacité de réaliser cette étape sont par exemple : un préparateur, un pré-conditionneur et conditionneur, un cuiseur, un mélangeur, un toasteur, un imprégnateur vapeur, un maturateur, un réacteur.

Etape d /d bis : Traitement thermique

Cette étape de traitement thermique, se réalise avec et/ou sans pression.

A. Etape de traitement thermique sous pression

Cette étape consiste à mettre les graines, ou le mélange ainsi préparé sous une pression minimum de 10 bars, préférentiellement supérieure à 20 bars, pendant un temps supérieur à 10 secondes, préférentiellement entre 10 secondes à 2 minutes, à une température supérieure à 80°C, préférentiellement supérieure à 100°C, voire comprise entre 100 et 150°C, et de façon plus avantageuse encore entre 110 et 140°C (et sans jamais dépasser 160°C).

Cette température est permise avantageusement par auto échauffement du fait des forces de cisaillement, de la friction et de la compression et éventuellement, de manière additionnelle, par un apport thermique exogène, par conduction (fluide caloporteur, résistance électrique, champs électromagnétique, etc.) ou par ajout de vapeur.

En effet, l'augmentation de la pression exercée sur les graines de lin préalablement fractionnées et préparées, entraînant par ailleurs une augmentation de la température, va permettre d'une part une meilleure évaporation de l'HCN libéré grâce à un changement brusque de pression, ou autrement dit, grâce à une détente isotherme, et d'autre part une amélioration de la digestibilité des graines, et notamment des Oméga 3 grâce à la rupture des parois cellulaires facilitant ainsi la disponibilité et donc l'accessibilité aux lipides des graines.

Aussi, cette étape a pour effet d'inhiber les activités enzymatiques de par la température induite.

Une liste non exhaustive d'équipements de traitement thermique sous pression capables de réaliser cette étape est la suivante : extrudeur, cuiseur-extrudeur, expandeur, presse.

Cette étape a pour objectif de réduire les facteurs antinutritionnels et d'améliorer la digestibilité de l'énergie et/ou de la protéine, tout en désactivant les enzymes endogènes et/ou exogènes.

B. Etape de traitement thermique sans pression

Cette étape consiste en un traitement thermique sans pression dont la durée est alors allongée de telle sorte qu'elle soit supérieure à 15 minutes, préférentiellement à 30 minutes, voire comprise entre 30 minutes et 2 heures, et que la température soit supérieure à 80°C, préférentiellement supérieure à 90°C, voire comprise entre 90 et 150°C.

Cette température est permise par un apport thermique exogène, par conduction (fluide caloporteur, résistance électrique, champ électromagnétique, etc.) ou par ajout de vapeur par exemple.

Cette étape a pour objectif d'inhiber les activités enzymatiques et d'évaporer l'HCN libéré. L'évaporation étant ici moins brutale, il est nécessaire d'augmenter la durée d'exposition de la matière à une température suffisamment haute pour permettre à l'acide cyanhydrique de changer d'état en passant de l'état liquide à l'état gazeux.

De la même façon, les équipements appropriés pour ce traitement thermique sans pression sont par exemple le sécheur, le toasteur, la vis thermostatée, etc.

Cette étape a également pour objectif de désactiver les enzymes endogènes et/ou exogènes, tout en améliorant la disponibilité de la matière grasse, notamment dans le cas d'un traitement thermique sous pression. Elle permet enfin, le cas échéant, de réduire l'humidité du mélange qui ne devra pas excéder 14%, préférentiellement 12% pour permettre un bon état de conservation du mélange.

Une façon de caractériser l'efficacité de cette étape (ces étapes) consiste à évaluer la réduction d'acide cyanhydrique (HCN) et l'amélioration de la matière grasse disponible (MGD).

Ainsi, il est attendu que la valeur HCN soit inférieure à 30 mg/kg, préférentiellement 20mg, voire 10mg. Et concernant la MGD, elle est attendue pour être au moins supérieure à 65%, préférentiellement 70%, voire 75%, et même 80%.

Les précédentes étapes du procédé, telles qu'elles viennent d'être décrites, peuvent par ailleurs être mises en œuvre, de manière avantageuse, en tenant compte des éléments décrits ci-après :

Refroidissement

A l'issue de l'étape précédente, les graines traitées sont chaudes. Elles nécessitent alors d'être refroidies afin de les faire descendre à une température leur permettant d'être stables dans le temps, et ainsi d'être conservées et stockées dans de bonnes conditions jusqu'à leur consommation. Par exemple, la température devra ne pas dépasser de 30°C la température ambiante, préférentiellement 20°C.

Triage

Cette étape de triage permet de rassembler des graines selon des critères de tailles, de poids, de forme, de densité ou selon des caractéristiques aérodynamique, colorimétrique, électrostatique. Les outils permettant d'effectuer ces opérations sont notamment : le tamiseur, le nettoyeur séparateur, la bluterie, l'épierreur, le plansichter, la table densimétrique, le tarare, le trieur optique, les systèmes d'aération (colonne d'aire, aspiration, soufflerie, etc.), magnétiques.

Cette opération peut avoir pour objectif de séparer des graines d'espèces différentes, de retirer des impuretés, d'alloter des graines d'espèces identiques, etc.

Dépelliculage

Une étape de dépelliculage a pour but de concentrer les teneurs en protéines, en énergie sous forme de lipides, ou en fibres. Il entraîne la production de plusieurs fractions dont une partie dite d'amande et une autre partie dite de pellicule.

Cette opération permet ainsi de répondre aux besoins nutritionnels de différentes espèces en limitant la proportion de composants faiblement digestibles d'une part, et en diminuant la concentration de certains facteurs antinutritionnels d'autre part, en l'occurrence dans la fraction dite d'amande. La fraction dite de pellicule se retrouve quant à elle plus concentrée en fibres, en mucilages et en lignanes et plus diluée en matières grasses, Oméga 3 et protéines. Ainsi, l'utilisation des fractions dite amande plutôt que graine entière permet de limiter les proportions de fibres solubles pour une même quantité d'Oméga 3, ce qui conduit à améliorer l'efficacité des mécanismes enzymatiques (accessibilité au substrat, diffusion des enzymes, résistance mécanique). Quant aux composés cyanogènes, ils sont particulièrement présents dans l'amande, mais sans pour autant être très dilués dans les pellicules.

Cette étape de dépelliculage est caractérisée par un rendement minimum apprécié à partir de l'effet de concentration ou dilution de l'un au moins des constituants suivants pour ce qui concerne la fraction la plus concentrée en amande :

| | |
|---|---|
| - Matières grasses | +3%, puis 5%, puis 10% |
| - Protéines brutes | +3%, puis 5%, puis 10% |
| - Cellulose brute | -5%, puis -10%, puis -15% |
| - Mucilages | -20%, puis -30%, puis -40% |
| - Lignanes | -20%, puis -30%, puis -40% |

Le dépelliculage est réalisé grâce à la combinaison d'une phase de sollicitations mécaniques et d'une phase de séparation, à la suite le cas échéant d'une possible réhydratation de l'amande précédée d'une phase de prétraitement thermique facilitant le dépelliculage.

Les sollicitations mécaniques simples et/ou combinés mises en œuvre pour remplir ces fonctions peuvent être de l'impact, de la compression ou de l'abrasion. Les outils permettant d'effectuer cette phase sont, notamment, de manière non exhaustive sont : les broyeurs ou concasseurs à cylindres et à marteaux, l'impacteur ou le broyeur à impact, le polisseur, le broyeur à palettes, le broyeur à meule, le broyeur à disques, le broyeur à broches, le broyeur à tête de coupe, le broyeur à billes ou boulets, le broyeur ou concasseur à lame, etc.

La séparation peut être réalisée selon des critères de tailles, de poids, de forme, de densité ou selon des caractéristiques aérodynamique, colorimétrique, électrostatique. Les outils permettant d'effectuer cette phase sont, notamment : le tamiseur, le nettoyeur séparateur, la bluterie, l'épierreur, le plansichter, la table densimétrique, le tarare, le trieur optique, les systèmes d'aération (colonne d'aire, aspiration, soufflerie, etc.) ou encore magnétiques, etc.

A l'issue de cette étape, il convient donc de préciser que les étapes suivantes de fractionnement (si besoin), de préparation thermique (si besoin) et de traitement thermique telles que décrites se réalisent sur des co-produits de graines de lin, et non pas sur des graines de lin entières.

### Trituration des graines et traitement du tourteau de lin

D'une autre manière, il est possible à l'issue de l'étape a) ou b) précédemment décrite, de procéder à une trituration des graines de lin, entières ou dépelliculées, de telle sorte que l'on obtient d'une part de l'huile de lin et d'autre part du tourteau de lin. Dans la mesure où le tourteau de lin est encore à une teneur supérieure à 8% de MG, préférentiellement 10%, voire 12%, il contient encore une certaine quantité d'Oméga 3, mais surtout une grande quantité d'HCN.

Comme précédemment à l'étape de décorticage, il convient donc de préciser qu'à l'issue de cette étape de trituration, les étapes suivantes de fractionnement, de préparation thermique (si besoin) et de traitement thermique telles que décrites se réalisent sur le tourteau de lin, co-produit de la trituration des graines de lin, et non pas sur des graines de lin entières.

### Utilisation de matière(s) première(s) additionnelle(s)

Il devient avantageux de choisir au moins une matière première à ajouter aux graines de lin, matière première qui sera retenue pour ses propriétés technologiques et/ou nutritionnelles et/ou économiques. En effet, en fonction de l'usage qui sera fait du mélange issu du procédé, et sa destination en termes d'espèce animale et de stade physiologique notamment, le choix de la (ou des) matière(s) première(s) portera (ront) notamment sur les caractéristiques nutritionnelles et le coût de revient des matières premières.

Mais elles auront également à être choisies sur la base de leurs intérêts technologiques à travers notamment :

- leurs propriétés physiques et donc leurs prédispositions à rendre plus avantageux les contraintes du procédé, modifiant ainsi les forces de pression et l'énergie thermique, en considérant notamment leur comportement rhéologique au cours du procédé ;
- leurs capacités à se mélanger avec les graines de lin en conditions humides et donc leurs capacités d'adsorption (captation de surface) ou d'absorption (captation par assimilation) de l'huile et/ou de l'eau ;
- la présence et/ou l'abondance d'enzymes d'intérêts, endogènes à la matière première additionnelle, et donc leur aptitude à accentuer les activités enzymatiques du procédé, via par exemple la béta-glucosidase pour améliorer la détoxification des graines de lin.

Avantageusement, les graines de lin seront associées préférentiellement à une part de graines protéagineuses et/ou de céréales, notamment quand la technologie thermique implique une étape de traitement thermique sous pression.

En effet, pour contraindre le passage dans l'extrudeur, l'apport de graines de protéagineux et/ou de céréales permet aux graines de lin d'être technologiquement mieux traitées et d'augmenter la biodisponibilité de la matière grasse.

Enfin, plus globalement, le choix de matière première additionnelle repose préférentiellement sur le potentiel d'amélioration nutritionnelle et économique que peut permettre d'atteindre ledit procédé appliqué aux graines de lin.

C'est ainsi que parmi les matières premières additionnelles, la préférence sera donnée d'abord aux graines protéagineuses et aux céréales, ensuite aux co-produits de céréales et protéagineux, aux sources de glucides simples voire complexes, et aux tourteaux d'oléagineux et autres co-produits d'oléagineux, puis à toutes autres matières premières usuelles en nutrition animale.

### Utilisation d'une solution antioxydante

Il peut s'avérer prudent, pour préserver l'intégrité nutritionnelle et fonctionnelle des Oméga 3 de la graine de lin issu du procédé, d'ajouter une étape faisant office solution antioxydante.

La graine de lin est déjà naturellement pourvue d'antioxydants sous la forme de lignanes, une famille de phyto-oestrogènes. Néanmoins, on préconise, le cas échéant, d'ajouter une solution antioxydante, notamment lorsque les conditions et les durées de transport et de stockage s'avèrent contraignantes. La température, la lumière et l'aération sont autant de facteurs, non exhaustifs, favorisant le risque d'oxydation des acides gras, et sur lesquels il peut être techniquement et économiquement difficile d'agir.

La solution antioxydante proposée consiste en l'usage d'au moins une des solutions suivantes :

- Conditionnement, transport et stockage des graines issues de l'invention à l'abri de la lumière ; par exemple dans des sacs, "big bag" et autres containers opaques ;
- Conditionnement au sein d'une sacherie dans laquelle l'oxygène de l'air aura été retiré, au moins en bonne partie (conditionnement sous vide) ; ou bien remplacé par un gaz inerte, par exemple de l'azote (conditionnement par inertage) ;
- Ajout d'au moins un antioxydant, préférentiellement plusieurs de telle sorte qu'ils agissent de manière complémentaire aux différentes étapes du processus d'oxydation, de l'initiation à la propagation, qu'ils soient de nature lipophile et hydrophile et d'origine chimique et/ou naturelle. Cet apport antioxydant se fera préférentiellement avant l'étape de fractionnement et de mélange, sous forme de poudre et/ou de liquide.

De manière non exhaustive, on peut citer quelques antioxydants d'origine naturelle ou de synthèse :

- les composés phénoliques sous différentes formes : phénols simples, flavonoïdes, isoflavonoïdes et anthocyanes, acides phénoliques et coumarines, lignanes, lignines, stilbénoïdes, métabolites non phénoliques, les naphtoquinones, tannins, resvératrol, procyanidines, acide rosmarinique, composés terpénoïdes, les lécithines ...
- Les vitamines telles que l'acide ascorbique et ses sels (vitamine C), les tocophérols (vitamine E) ; le $\beta$-carotène (provitamine A) et autres caroténoïdes, les tocotriénols...
- Le gallate de propyle, l'acide citrique, l'hydroxyanisol butylé (BHA), l'hydroxytoluène butylé (BHT), le butylhydroquinone tertiaire (BHQT)...

Agitation lors de l'étape thermique préparatoire

A l'étape c), un avantage consiste à agiter les graines, ou le mélange, afin qu'il subisse les mêmes conditions de traitement. En effet l'agitation va permettre de :

- homogénéiser les graines fractionnées avec les apports d'eau et autres apports complémentaires éventuels, dans le but notamment de faciliter la fonctionnalité dès la mise en contact des enzymes avec leurs substrats, de la fonction antioxydante sur les acides gras ;
- homogénéiser l'eau ajoutée ainsi que la température au sein des graines ou du mélange ;
- éviter la constitution d'agglomérats et ainsi faciliter les conditions de transport des graines ou du mélange.

Le présent procédé permet d'atteindre des résultats techniques avantageux au regard de l'état de l'art.

En effet, aucun procédé répandu dans la bibliographie ne permet d'atteindre des améliorations techniques et économiques obtenues par le présent procédé, notamment au regard des systèmes récents de production des animaux, caractérisés par des avancées génétiques significatives adaptées à un système d'alimentation basée essentiellement sur le soja, le maïs grain et les céréales. L'association des différentes étapes décrites précédemment permet d'obtenir une graine de lin caractérisée comme étant à la fois :

1) A teneur élevée en au moins une composante nutritionnelle

| Composante nutritionnelle hautement valorisable | Unité (sur brut) | Plage de variation | | Graine issue de l'invention |
|---|---|---|---|---|
| | | Minimum | Maximum | |
| Matière grasse | % | 30 | 50 | > 38 |
| Oméga 3 | % AG totaux | 3 | 72 | > 54 |
| Oméga 3 | % | 1 | 36 | > 20 |

Préférentiellement, les graines issues de l'invention contiennent au moins 40% de MG, voire 42% ; et 56% d'ALA dans les AG totaux, voire 58%.

2) A teneur faible en au moins une composante nutritionnelle faiblement valorisable ou en une faible capacité de rétention en eau :

| Composante nutritionnelle faiblement valorisable | Unité (sur brut) | Plage de variation | | Graine cuite |
|---|---|---|---|---|
| | | Minimum | Maximum | |
| NDF | % | 12.1 | 30.9 | < 22 |
| Mucilages | g /kg | 2.2 | 5.8 | < 4.5 |
| Cellulose brute | % | 3.5 | 15.3 | < 11 |

Préférentiellement, les graines issues de l'invention contiennent au plus 19% de NDF voire 17% ; et 4g/kg de mucilages, voire 3,5.

3) A teneur faible en acide cyanhydrique

| Facteur Antinutritionnel | Unité (sur brut) | Plage de variation | | Graine cuite |
|---|---|---|---|---|
| | | Minimum | Maximum | |
| HCN | mg/kg | 130 | 450 | < 30 |

Préférentiellement, les graines issues de l'invention contiennent au plus 20mg, voire 10mg d'HCN par kg.

4) À un niveau amélioré de disponibilité de la matière grasse, et/ou de digestibilité de l'énergie et/ou de la protéine et de ses acides aminés:

| | Matière grasse disponible (MGD) | Digestibilité Energie (% d'augmentation) | Digestibilité Protéine/ Acides aminés (% d'augmentation) |
|---|---|---|---|
| Volailles | | EM (Kcal) | CUD (%) |
| | | +20 à 100% | +5 à 30% |
| Porcs | | EN (kcal) | CUD (%) |
| | 65% | +40 à 100% | +5 à 15% |
| Poisson | | CUD (%) | CUD (%) |
| | | +10 à 40% | +5 à 15% |
| Autres espèces | | % d'augmentation | CUD (%) |
| | | +10 à 40% | +5 à 15% |

Préférentiellement, les graines issues de l'invention auront une matière grasse disponible d'au moins 70%, voire 75% et même jusqu'à 80%, dans les conditions opératoires utilisées, au bout de 10 minutes d'extraction.

Les résultats présentés ci-dessus se comparent à une graine ayant subi uniquement une étape de fractionnement semblable à celle décrite dans l'invention et une étape de granulation à une température < à 100°C. Et les résultats sont également issus de la génétique animale actuelle, étant considérée de races sélectionnées pour leurs productivités.

Les résultats présentés ci-après mettent en avant l'effet synergique sur la digestibilité de l'énergie des graines de lin de l'association de la sélection de la graine de lin et du traitement technologique de cette dernière selon les modalités précisées par l'invention.

*Base 100 = graine de lin non sélectionnée & non traitée comme décrite dans le tableau ci-dessus*

| Sélection des graines selon l'invention | Traitement technologique selon l'invention | Valorisation nutritionnelle par la volaille sur une base 100 |
|---|---|---|
| (Matière grasse, Oméga 3, NDF, Mucilages, CRE) | *(Mélange, Fractionnement, Préparation thermique, Traitement thermique)* | **Digestibilité Energie** |
| **Non** | **Non** | 100 |
| **Oui** | **Non** | 149 |
| **Non** | **Oui** | 110 |
| **Oui** | **Oui** | 203 |

La valorisation nutritionnelle chez la volaille s'évalue au travers deux paramètres : digestibilité de l'énergie ou énergie métabolisable (EM) ; digestibilité de la protéine (CUD N).

Sur la digestibilité de l'énergie, lorsque les leviers sont considérés de manière isolée, l'impact de la sélection des graines de lin permet une hausse de 49% de sa valeur ; l'impact du traitement technologique permet quant à lui une hausse de 10%. Lorsque ces deux leviers sont tous deux considérés, l'impact est de 103% par rapport à la graine de lin non sélectionnée et non traitée comme décrit par l'invention. Il ne s'agit donc pas d'une simple addition des leviers de la sélection (+49%) et du traitement technologique (+10%) mais d'une vraie synergie (=103%).

De ces différentes caractéristiques, on peut faire le constat aussi que la présente invention permet d'améliorer la détoxification et la valorisation alimentaire de la graine de lin au regard de la bibliographie et notamment du brevet européen précité.

En terme de détoxification brute, la présente invention améliore la teneur résiduelle en composés cyanogènes dans la mesure où l'HCN mesuré atteint 30mg par kg brut de graine, contre 50mg selon le brevet EP 1 155 626.

| | | Graine de lin crue | Graine de lin selon le brevet EP 1 155 626 | Graine de lin selon la présente invention |
|---|---|---|---|---|
| Teneur en HCN | mg /kg brut | 265 | 50 | 30 |

Sachant que l'invention est préférentiellement en capacité de réduire la teneur de HCN en dessous du seuil de 20mg /kg voire même de 10mg /kg.

En terme d'analyse du bénéfice risque, il est par ailleurs intéressant de comparer la quantité d'HCN par kg d'Oméga 3 apporté.

La présente invention permet de réduire le niveau d'HCN par rapport au brevet EP 1 155 626, en passant de 160mg à 145mg /kg d'Oméga 3.

| | | Graine de lin crue | Graine de lin selon le brevet n°1 155 626 | Graine de lin selon la présente invention |
|---|---|---|---|---|
| Teneur en HCN | mg /kg d'Oméga 3 | 1100 | 160 | 145 |

Sachant que l'invention peut préférentiellement atteindre 100 voire 50 mg d'HCN par kg d'Oméga 3.

Enfin, une dernière manière de présenter l'avantage de l'invention consiste à comparer la teneur en HCN par kg d'Oméga 3 disponible, en utilisant le critère de MGD comme prédicteur de la digestibilité de la MG. C'est ainsi qu'on arrive à montrer que la présente invention permet d'obtenir un meilleur ratio d'efficacité par rapport au brevet précité.

| | | Graine de lin crue | Graine de lin selon le brevet EP 1 155 626 | Graine de lin selon la présente invention |
|---|---|---|---|---|
| Teneur en HCN | mg /kg d'Oméga 3 disponible | 3700 | 2000 | 250 |

Sachant que l'invention peut préférentiellement atteindre 145 voire 65 mg d'HCN par kg d'oméga 3 disponible.

Mais la présente invention va aussi au-delà d'une amélioration du bénéfice/risque en proposant d'utiliser des graines à la base plus digestive au regard de leurs plus faibles teneurs en composés faiblement valorisables. C'est ainsi qu'est présentée dans le tableau ci-dessous une comparaison entre graine crue et graine issue de l'invention, sur les quantités de NDF et de mucilages en g par kg brut, mais aussi en g par kg d'Oméga 3 et surtout en g par kg d'Oméga 3 disponible.

Ainsi, on démontre le double avantage d'une graine avec moins de composés faiblement valorisables d'une part et plus d'Oméga 3 disponible d'autre part.

| | | Graine de lin crue | Graine de lin selon l'invention |
|---|---|---|---|
| NDF | g /kg brut | 240 | 190 |
| NDF | g /kg d'Oméga 3 | 996 | 926 |
| NDF | g /kg d'Oméga 3 disponible | 3351 | 1543 |
| Mucilages | g /kg brut | 5 | 4 |
| Mucilages | g/kg d'Oméga 3 | 21 | 19 |
| Mucilages | g /kg d'Oméga 3 disponible | 70 | 32 |

Ces résultats caractéristiques des graines issues de l'invention sont synergiques dans la mesure où l'acide cyanhydrique n'est pas impliqué dans les résultats dits de digestibilité, ni de disponibilité de la matière grasse qui se révèle être bien corrélée aux résultats de digestibilité.

En effet, l'HCN agit négativement sur le métabolisme énergétique de l'animal. Il a pour effet d'inhiber l'activité enzymatique de la cytochrome oxydase servant au transport d'électron dans la chaine respiratoire pour former des molécules d'ATP.

C'est ainsi que l'invention a l'avantage de ne pas se contenter d'atteindre des hauts niveaux dits de MGD et de digestibilité des graines de lin, des hautes teneurs en composantes nutritionnelles et de faibles teneurs en composantes faiblement valorisables, mais aussi d'éviter les contre-performances techniques et autres problèmes de santé liés à l'émanation potentielle de l'HCN.

0) Essai de digestibilité sur le poulet de chair (essai non conforme à l'invention)

Dans une ferme expérimentale, il a été évalué la digestibilité de graines de lin issues de différents itinéraires technologiques. Les essais de digestibilités sont menés sur poulet mâle (ROSS PM3) par substitution de l'aliment de base à hauteur de 30% par les graines à tester. La valorisation énergétique et la digestibilité de la protéine sont calculées par différence en prenant en compte le principe d'additivité. Les leviers testés sont de manière isolée et de manière cumulée l'impact de la sélection des graines de lin et du traitement technologique de ces dernières. Le tableau ci-dessous présente les éléments suivants : Caractéristiques des graines de lin sélectionnées ; Caractéristiques des procédés technologiques ; Caractéristiques des graines de lin traitées.

| Etape de sélection des graines de lin selon l'invention | Non | Non | Oui | Oui |
|---|---|---|---|---|
| Etape de traitement technologique des graines de lin selon l'invention | Non | Oui | Non | Oui |
| **Caractéristiques des graines de lin** | | | | |
| Matière grasse, % | 43.6 | | 42.7 | |
| Oméga 3, % AGT | 59.2 | | 58.2 | |
| NDF, % | 23.1 | | 19.0 | |
| Mucilages, g/kg | 4.7 | | 2.4 | |

(suite)

| Caractéristiques des graines de lin | | | | |
|---|---|---|---|---|
| Capacité de Rétention en Eau (%) | | 5.1 | | 3.5 |
| HCN Graine de lin, mg/kg | | 294 | | 271 |
| **Procédés de traitements des Graines de lin** | | | | |
| **Mélange** | - | Non | - | Non |
| **Fractionnement** | - | Oui | - | Oui |
| **Décorticage** | - | Oui | - | Oui |
| **Préparation thermique** | | | | |
| Température | - | 45°C | - | 45°C |
| Humidité | - | 11% | - | 11% |
| Durée | - | 15 min | - | 15 min |
| **Traitement thermique** | | | | |
| Température | - | 135°C | - | 135°C |
| Durée | - | 15 s | - | 15 s |
| Pression | - | 20 bars | - | 20 bars |
| **Caractéristiques des Graines de lin traitées** | | | | |
| EM Graine de lin, kcal/kg | 1842 | 2020 | 2751 | 3743 |
| EM Graine de lin, sur base 100 | 100 | 110 | 149 | 203 |

Base 100 = graine de lin non sélectionné & non traitée comme décrite dans le tableau ci-dessus Cet essai de digestibilité mené sur les poulets illustre l'intérêt que présente, de manière isolée, la sélection des graines de lin ainsi que le traitement technologique de ces dernières :

-    Sur l'énergie, l'impact de la sélection est de +49%, l'impact du traitement de +10% en digestibilité par rapport aux graines non sélectionnées ou non traitées ;

Lorsque les deux leviers sont menés conjointement, ce n'est pas un simple effet additif des impacts considérés de manière isolée qui se mène mais bien une synergie de ceux-ci :

-    Sur l'énergie, l'impact de la sélection et du traitement technologique des graines de lin est de +103% par rapport à une graine de lin non sélectionnée et non technologiquement traitée :

Plusieurs essais zootechniques sur des monogastriques et un essai in vitro sur des ruminants ont été menés dans différents espèces et élevages. Ces essais sont complétés par une étude d'intérêt économique.

1) Essai zootechnique sur la poule pondeuse (essai non conforme à l'invention)

Dans une ferme expérimentale, on a introduit dans l'alimentation des poules pondeuses (Isa-Brown), pendant environ 3 mois, 3% de graines de lin et associées à 3% de graine de féverole, étant tenu compte des valeurs d'EM (énergie métabolisable) et de CUD N (digestibilité des protéines) préalablement déterminés par étude de digestibilité.
Compte tenu de la méthodologie retenue qui consiste à formuler les aliments pour poules pondeuses en iso-nutritionnels (énergie métabolisable, acides aminés essentiels digestibles, calcium, phosphore, etc.) en prenant en compte les différences de valeurs de digestibilité évaluées plus tôt, l'objectif de cet essai était de vérifier si, grâce à l'effet synergique d'une réduction en facteurs antinutritionnels, l'essai permettait d'obtenir un niveau de performance zootechnique au moins égal, voire supérieur à celui d'un aliment de référence.
La graine de lin est le résultat d'une combinaison de traitements, tout d'abord la sélection, permettant d'isoler des graines aux caractéristiques particulières (MG%, Oméga3, NDF, Mucilages, CRE) mentionnées dans le tableau ci-après. Cette graine est ensuite broyée puis préparée thermiquement durant 15minutes, en incorporant de la vapeur augmentant la température pour atteindre 45°C et une humidité de 11%. Enfin la graine broyée et préchauffée et subie une mise sous pression de 20 bars pendant 15 secondes, la température est alors de 135°C.

Ainsi, on présente dans le tableau ci-dessous :

- Les caractéristiques nutritionnelles retenues pour la graine de lin d'une part et pour la graine de lin ayant simplement subi un broyage d'autre part, en comparaison à une autre graine de lin standard non testée chez la poule pondeuse, lesquelles valeurs ont été préalablement déterminées par l'étude de leur digestibilité sur poulet selon les protocoles habituels connus de l'Homme de l'art et faisant référence ;
- Les performances de ponte en termes de poids d'œuf, de masse d'œuf exporté (prenant en compte le nombre d'oeufs pondus) et l'indice de consommation (efficacité alimentaire pour produire 1 œuf).

Tableau : Caractéristiques des rations et des graines de lin pour poules pondeuses, et performances de production associées

| | Témoin Sans graine de lin | Graine de Lin Standard seulement broyée | Graine de Lin Essai seulement broyée | Graine de Lin Essai issue de l'invention |
|---|---|---|---|---|
| **Caractéristiques de la ration** | | | | |
| EM ration, kcal/kg | 2800 | - | 2800 | 2800 |
| Lys digestible, g/kg | 6,9 | - | 6,9 | 6,9 |
| **Caractéristiques des Graines de lin** | | | | |
| Matière grasse, % | | 37.4 | 42.7 | |
| Oméga 3, % AGT | | 55.3 | 58.2 | |
| NDF, % | | 23.8 | 18.3 | |
| Mucilages, g/kg | | 3.9 | 3.4 | |
| CRE (%) | | 6.3 | 3.8 | |
| HCN Graine de lin, mg/kg | - | 290 | 271 | |
| MGD graine de lin, % | - | 45.7 | 40.2 | |
| **Procédés de traitements des Graines de lin** | | | | |
| **Mélange** | - | - | Non | Non |
| **Fractionnement** | - | - | Oui | Oui |
| **Préparation thermique** | | | | |
| Température | - | - | - | 45°C |
| Humidité | - | - | - | 11 % |
| Durée | - | - | - | 15 min |
| **Traitement thermique** | | | | |
| Température | - | - | - | 135°C |
| Durée | - | - | - | 15 s |
| Pression | - | - | - | 20 bars |
| **Caractéristiques des Graines de lin traitées** | | | | |
| EM Graine de lin, kcal/kg | - | 1842 | 2751 | 3743 |
| CUD N Graine de lin, % | - | 54 | 67 | 71 |

(suite)

| | Caractéristiques des Graines de lin traitées | | | |
|---|---|---|---|---|
| HCN Graine de lin, mg/kg | - | 290 | 271 | 19 |
| MGD graine de lin, % | - | 49.8 | 45 | 81 |
| | Performance de production des poules | | | |
| Poids des œufs, g | 61,9 | - | 63,1 | 63,2 |
| Masse exportée, g/j | 61,0 | - | 61,4 | 61,8 |
| Taux de ponte, % | 98,6 | - | 97,3 | 97,8 |
| Indice de consommation | 1,92 | - | 1,94 | 1,93 |

Il en ressort tout d'abord que les différences de valeurs de digestibilité entre les 3 graines de lin sont hautement différentes. Les valeurs d'EM et de CUD N passent respectivement de 1842kcal et 54% pour une graine de lin standard, à 2751kcal et 67% pour une graine de lin préalablement choisie mais seulement broyée, à 3743kcal et 71% pour cette même graine de lin choisie mais ayant subi l'intégralité du procédé de l'invention.

Ces performances de production des poules pondeuses sont à mettre en relation avec les caractéristiques de composition de la graine de lin sélectionnée puis traitée en MG, NDF, Mucilages puis EM et CUD N d'une part et avec les caractéristiques d'efficacité du traitement en termes de HCN et de MGD d'autre part. Ces performances sont le fruit d'une interaction positive d'une sélection de graines de lin adaptées et d'un procédé technologique optimisé.

Aussi, il convient d'admettre, comparativement au lot témoin avec tourteau de soja, lequel est déjà très bien caractérisé en termes de valeurs de digestibilité et de performances de production, que :

- Les résultats obtenus, en termes de performance de production des poules, avec la graine de lin "Essai seulement broyée" sont sensiblement inférieurs au témoin « tourteau de soja », mettant en évidence les effets négatifs des facteurs antinutritionnels sur les performances de ponte de la poule. En effet, on constate principalement que les poules de ce lot ont un moindre taux de ponte mais un poids d'œufs supérieur, ce qui entraîne qu'elles ont exportées un peu plus de masse d'œufs, mais ceci en consommant davantage d'aliment pour produire une même quantité d'œufs, signe d'une légère perte d'efficacité alimentaire (augmentation de l'indice de consommation).
- Alors que la valorisation nutritionnelle de la graine de lin "Essai issue de l'invention" était déjà significativement supérieure à la graine de lin "Essai seulement broyée," les résultats obtenus avec la graine de lin de l'invention montrent une amélioration sensible des différents critères de performances.

C'est ainsi que l'on observe l'avantage de l'invention. Non seulement la graine de lin du présent procédé se caractérise par des valeurs nutritionnelles supérieures dans le cadre d'études dites de digestibilité, mais elle permet en même temps d'éviter les effets néfastes des facteurs antinutritionnels tout en réussissant à atteindre des performances de production semblable au tourteau de soja.

2) Essai zootechnique et économique sur la volaille de chair

Dans une ferme de référence de poulet à souche rapide, deux bâtiments identiques ont été alimentés selon deux programmes alimentaires. Le programme habituel à base de tourteau et huile de soja et de céréales est comparé au programme alimentaire incluant une part de graine de lin issue de l'invention, associée en mélange à des graines protéagineuses. Ce mélange, dans un rapport de 70% de graines de lin et 30% de graines de féveroles, a été distribué à hauteur de 2,5% en période de croissance des animaux et de 3% en période de finition.

Les performances technico-économiques ont été évaluées à partir des relevés de consommation, de poids des animaux, de croissance, d'indice de consommation, de mortalité et de surcoût alimentaire.

Dans cet essai, les valeurs nutritionnelles de la graine de lin utilisées pour la formulation des aliments reposaient sur les valeurs dites de digestibilités préalablement déterminées. L'objectif était donc de vérifier si les performances zootechniques des poulets étaient bien être égales ou supérieures à celles du lot témoin.

Le tableau ci-dessous présente les caractéristiques des graines de lin, des traitements technologiques mis en œuvre, des graines de lin traitées ainsi que les données de performances techniques et économiques obtenues.

| | Lot Témoin sans Graine de lin | Lot Essai Avec Graine de lin seulement broyée | Lot Essai Avec Graine de lin issue de l'invention |
|---|---|---|---|
| **Caractéristiques de la ration** | | | |
| EM ration, kcal/kg | 3050 | - | 3050 |
| Lys digestible, g/kg | 10 | - | 10 |
| **Caractéristiques des graines de lin** | | | |
| Matière grasse, % | | 42.3 | |
| Oméga 3, % AGT | | 59.3 | |
| NDF, % | | 16.9 | |
| Mucilages, g/kg | | 3.7 | |
| Capacité de Rétention en Eau (%) | | 4.0 | |
| HCN Graine de lin, mg/kg | - | 135 | |
| MGD graine de lin, % | - | 38.5 | |
| **Procédés de traitements des Graines de lin** | | | |
| **Mélange** | - | Non | Non |
| **Fractionnement** | - | Oui | Oui |
| **Préparation thermique** | | | |
| Température | - | - | 45°C |
| Humidité | - | - | 11 % |
| Durée | - | - | 15 min |
| **Traitement thermique** | | | |
| Température | - | - | 135°C |
| Durée | - | - | 15 s |
| Pression | - | - | 20 bars |
| **Caractéristiques des Graines de lin traitées** | | | |
| EM Graine de lin, kcal/kg | | 2751 | 3743 |
| CUD N Graine de lin, % | | 67 | 71 |
| HCN Graine de lin, mg/kg | | 135 | <10 |
| MGD graine de lin, % | | 43.2 | 79.8 |
| **Performance de production des poulets Sur base 100 du témoin** | | | |
| Poids moyen | 100 | - | 104 |
| Gain moyen quotidien | 100 | - | 104 |
| Indice de consommation technique | 100 | - | 96 |
| Indice de performances | 100 | - | 109 |
| Indice de consommation économique | 100 | - | 96 |

Ainsi, les résultats techniques permis par l'invention ont tout d'abord démontré l'efficacité du procédé à réduire la teneur en HCN et à augmenter la teneur en MGD ; et surtout ils ont compensé le surcoût alimentaire, avec 4% d'amélioration de l'indice économique.

C'est ainsi que la solution proposée par l'invention a engendré une amélioration significative des performances techniques (poids +4%, GMQ +4%, IC technique -4% et indice de performances +9%) et économiques.

D'après ces résultats zootechniques, les valeurs de digestibilité des graines de lin issues de l'invention ne peuvent expliquer à elles seules l'amélioration des performances.

En effet, alors que les résultats de digestibilité ont été pris en compte lors de la formulation des aliments, les performances de production observées sont supérieures ; signe d'un effet synergique lié à une meilleure valorisation alimentaire des graines de lin, exprimé au niveau du métabolisme de l'animal, et que l'on peut rattacher à la réduction des facteurs antinutritionnels

3) Etude in vitro de biohydrogénation des acides gras chez le ruminant

Chez les ruminants, les lipides alimentaires sont lipolysés et les acides gras insaturés sont partiellement hydrogénés dans le rumen. Ils sont absorbés dans l'intestin grêle et passent en partie, et après une éventuelle désaturation, dans le lait et la viande. Cette réaction d'hydrogénation des acides gras insaturés par les bactéries ruminales est appelée biohydrogénation.

Elle se décompose en plusieurs étapes pour les acides gras polyinsaturés et débute toujours par une première réaction d'isomérisation. Cette isomérisation est réalisée par différentes bactéries ruminales, d'où la formation de divers isomères. Pour l'acide alpha-linolénique ALA, la première réaction d'isomérisation est suivie de trois réductions conduisant jusqu'à la synthèse d'acide stéarique 18:0.

Les intermédiaires de cette biohydrogénation, notamment les acides linoléniques conjugués (CLnA), issus de la biohydrogénation de l'ALA peuvent présenter des propriétés bénéfiques pour la santé humaine. L'acide vaccénique (transi 1 -C18 :1) est également produit au cours de la biohydrogénation de l'ALA, et peut être désaturé en CLA au sein de la mamelle des ruminants et de l'organisme du consommateur. C'est pourquoi augmenter sa production dans le rumen est aussi d'intérêt, dans la mesure où l'acide trans10-C18 :1 n'est pas augmenté dans les mêmes proportions. En effet, ce dernier acide gras est révélateur d'un dysfonctionnement ruminal et est réputé pour des propriétés néfastes sur le métabolisme des ruminants et la qualité nutritionnelle des produits pour l'homme.

L'étude et la maîtrise de la biohydrogénation ruminale des acides gras est donc un point essentiel pour mimer (imiter) les effets d'une alimentation à base d'herbe d'une part, et pour améliorer l'équilibre microbien du rumen et la qualité nutritionnelle des productions des ruminants d'autre part.

Afin de déterminer l'intérêt de l'invention dans l'alimentation des animaux ruminants, la disparition des ALA Oméga 3 par biohydrogénation, et leur devenir en différents acides gras intermédiaires de l'hydrogénation ont été évalué comparativement aux graines de lin sous ses différentes formes connues, et comparativement aux ALA Oméga 3 d'une herbe de référence.

Les graines de lin sous ses différentes formes connues et issues de l'invention ont toutes été analysées pour déterminer notamment la teneur en matière grasse disponible (MGD) après 10 minutes d'agitation, selon la méthode précédemment décrite.

Les graines différemment traitées, l'huile et l'herbe de référence ont été introduits dans des sachets en Nylon (marque déposée) puis incubés in vitro dans du jus de rumen, pendant de 2 ou 6 heures. Les acides gras ont été analysés dans les produits initiaux et en fin d'incubation, de façon à calculer un pourcentage de disparition (taux de biohydrogénation, qui mesure l'efficacité de l'étape initiale d'isomérisation) de l'ALA, le devenir de cet ALA en CLnA et en C18 :2 transi 1-cis15, le devenir des AG insaturés de la graine de lin en C18 :0, mais aussi la proportion de C18 :1 t11 apparus et le ratio entre le C18 :1 trans 11 et le C18 :1 trans 10.

Dans l'optique de mimer au mieux la cinétique d'hydrogénation de l'ALA de l'herbe, il convient de se rapprocher des valeurs en ces différents isomères d'AG obtenus avec l'herbe. Dans le tableau ci-dessous sont présentés les caractéristiques des graines de lin, des traitements technologiques mis en œuvre, des graines de lin traitées ainsi que les résultats après 2 heures d'incubation.

%BH : taux de biohydrogenation

| | Graine de lin crue broyée | Graine de lin cuite extrudée | Graine de lin de l'invention | Huile de lin | Herbe de référence |
|---|---|---|---|---|---|
| | **Caractéristiques des graines de lin** | | | | |
| Matière grasse, % | 42.3 | | | 100 | 23.4 à 33.5 |
| **Oméga 3, % AGT** | 59.3 | | | 55.6 | 58.8 |

(suite)

| | Graine de lin crue broyée | Graine de lin cuite extrudée | Graine de lin de l'invention | Huile de lin | Herbe de référence |
|---|---|---|---|---|---|
| | **Caractéristiques des graines de lin** | | | | |
| **NDF,** % | 16.9 | | | 0 | 55.1 à 62.6 |
| **Mucilages,** g/kg | 3.7 | | | 0 | 0 |
| **Capacité de Rétention en Eau** (%) | 4.0 | | | - | - |
| **HCN Graine de lin,** mg/kg | 135 | | | 0 | 0 |
| **MGD graine de lin,** % | 38.5 | | | 98.8 | - |
| | **Procédés de traitements des Graines de lin** | | | | |
| Mélange | Non | Non | Non | - | - |
| Fractionnement | Oui | Oui | Oui | - | - |
| Préparation thermique | | | | | |
| Température | - | - | 45°C | - | - |
| Humidité | - | - | 11 % | - | - |
| Durée | - | - | 15 min | - | - |
| Traitement thermique | | | | | |
| Température | - | 90°C | 135°C | - | - |
| Durée | - | 15 s | 15 s | - | - |
| Pression | - | 5 bars | 20 bars | - | - |
| | **Caractéristiques des Graines de lin traitées** | | | | |
| HCN Graine de lin, mg/kg | 192 | 41 | <10 | | |
| MGD graine de lin, % | 45 | 63 | 75.6 | | |
| | **Résultats** | | | | |
| %BH C18:3 | 33.0 | 36.5 | 34 à 40 | 32.8 | 81.3 |
| Devenir en CLnA | 2.3 | 4.3 | 5 à 9 | 7.8 | 6.9 |
| Devenir en C18:2 t11 c15 | 10.6 | 14.9 | 15 à 19 | 11.3 | 17.8 |
| % C18:1 t11 | 2.1 | 2.6 | 2.7 à 3.6 | 2.0 | 6.9 |
| C18:1 t11 / C18:1 t10 | 2.4 | 3.0 | 3.5 à 4.1 | 2.6 | 3.9 |
| Devenir en C18:0 | 27.7 | 19.1 | 10 à 20 | 23.8 | 53.6 |

Le premier constat réside dans la très forte biohydrogénation de l'ALA de l'herbe, conduisant notamment à une très forte proportion de C18 :0, comparativement aux sources d'ALA sous forme de lin.

On peut ainsi considérer que la quantité d'ALA à distribuer dans la ration des ruminants sous forme de lin peut être réduite par rapport à l'herbe, pour obtenir une quantité similaire d'ALA à la sortie du rumen, ces ALA qui auront échappés à la biohydrogénation.

D'un autre côté, en considérant une quantité d'apport équivalente d'ALA sous forme d'herbe ou de lin sous ces différentes, on observe que :

- la graine de lin crue broyée a une cinétique d'hydrogénation rapide conduisant à une très faible proportion d'intermédiaires d'hydrogénation, et à une proportion importante de C18 :0. On remarquera que le ratio C18 :1 trans 11 / C18 :1 trans 10 est relativement faible.
- la graine de lin cuite extrudée permet un ralentissement de la cinétique d'hydrogénation de l'ALA, conduisant à davantage d'intermédiaires d'hydrogénation (CLnA et C18 :2 trans 11 cis 15) et de C18 :0, ainsi qu'à une plus forte proportion de C18 :1 trans 11 et une amélioration du ratio C18 :1 trans 11 / C18 :1 trans 10.

- l'huile de lin entraîne également un ralentissement de la cinétique d'hydrogénation de l'ALA, avec quelques variantes par rapport à la graine de lin cuite extrudée dans la mesure où on observe moins de C18 :1 trans 11 et une détérioration du ratio C18 :1 trans 11 / C18 :1 trans 10.
- la graine de lin issue de l'invention, selon les différentes conditions de traitement évoquées, permet d'obtenir une cinétique d'apparition des intermédiaires d'hydrogénation de l'ALA semblable à celle de l'herbe, avec une proportion de C18 :1 trans 11 plus proche de l'herbe et un ratio C18 :1 trans 11 / C18 :1 trans 10 semblable à l'herbe.

Son taux d'hydrogénation devient supérieur aux autres sources de lin et tend à se rapprocher un peu de celui de l'herbe. Il en reste cependant éloigné mais cet écart est compensé par une moindre synthèse de C18 :0.

A l'issue de cette étude, on peut conclure que les graines de lin issues de l'invention sont bien celles qui se rapprochent le plus du modèle de l'herbe, étant entendu que l'herbe représente une alimentation naturelle, saine et durable, dans l'intérêt des ruminants et de leur santé, et dans l'intérêt du consommateur.

Cette étude a par ailleurs confirmé qu'au sein des graines de lin évaluées, la matière grasse disponible était un bon critère de prédiction du devenir de l'ALA dans le rumen.

4) Etude d'intérêt économique du procédé selon la présente invention

Dans le but de réaliser cette analyse économique, on a fait usage d'un logiciel de formulation des aliments pour volailles, dûment renseigné à cet effet en termes de matières premières disponibles, de valeurs nutritionnelles des matières premières, de prix de ces matières premières et de contraintes nutritionnelles des aliments pour volailles de chair et pondeuses, à différents stades physiologiques de leur production.

C'est ainsi que, après avoir renseigné les valeurs nutritionnelles et les prix potentiels des meilleures combinaisons de l'invention, on a pu évaluer la prédisposition de l'invention à être économiquement viable.

Par cette même approche, on a également pu évaluer les prix d'intérêt des matières premières élaborées à partir des meilleures combinaisons de procédés issues de l'invention. Et de là, il a été constaté que l'invention permettait tout à fait d'être économiquement pertinente dans le cadre d'une alimentation équilibrée en ALA Oméga 3, par exemple en formulant sur des contraintes de formulation liées à des obligations de moyens en ALA Oméga 3 comme dans les cahiers des charges de l'association Bleu-Blanc-Cœur.

Ci-dessous sont présentées trois formules alimentaires pour poulets de chair en croissance montrant la faveur économique faite à la solution issue de l'invention (un mélange de graines de lin et de féverole, à raison de 70% et 30% respectivement, du fait de sa priorité technico-économique en terme d'inclusion par optimisation dans les formules d'aliments Bleu-Blanc-Cœur, en comparaison aux matières premières connues de l'état de l'art (graines de lin broyées ou extrudées).

Tableau de comparaison de trois formules d'aliments croissance pour poulet de chair Bleu-Blanc-Cœur : l'une à partir de graine de lin broyée, une deuxième à partir de graine de lin extrudée et une dernière à partir de graines de lin issues de l'invention.

|  | Formule Témoin Avec graines de lin broyées | Formule Témoin Avec graines de lin extrudées | Formule Essai Avec graines de lin de l'invention |
|---|---|---|---|
| **Composition des formules** | | | |
| Tourteau de soja | 22.3 | 18.1 | 20.8 |
| Tourteau de colza | | | |
| Blé | 39.5 | 62.5 | 53.4 |
| Maïs | 24.5 | 3.7 | 11.9 |
| Graine de lin broyée | 3.2 | | |
| Graine de lin extrudée (70% graine de lin + 30% son de blé) | | 3.8 | |
| Solution de l'invention (70% graine de lin + 30% graine de féverole) | | | 3.4 |
| Gluten de maïs | 3.6 | 5.0 | 3.6 |

(suite)

| | Formule Témoin Avec graines de lin broyées | Formule Témoin Avec graines de lin extrudées | Formule Essai Avec graines de lin de l'invention |
|---|---|---|---|
| **Composition des formules** | | | |
| Huile de colza | 4 | 4 | 4 |
| Minéraux & vitamines | 2.3 | 2.3 | 2.3 |
| Acides aminés | 0.6 | 0.6 | 0.6 |
| **Caractéristiques nutritionnelles** | | | |
| Energie métabolisable | 3100 kcal | 3100 kcal | 3100 kcal |
| Protéine | 19,5% | 19,5% | 19,5% |
| Lysine digestible | 10,3g/kg | 10,3g/kg | 10,3g/kg |
| Calcium | 0,79% | 0,79% | 0,79% |
| Phosphore | 0,40% | 0,40% | 0,40% |
| ALA Omega 3 | 6 g /kg | 6 g /kg | 6 g /kg |
| Prix de revient | 288.3 € /tonne | 287.5 € /tonne | 286.4 € /tonne |

On constate à travers cet exercice de formulation que la solution de l'invention s'optimise dans une formule d'aliment croissance pour poulet de chair "Bleu-Blanc-Coeur", et permet de faire des économies de l'ordre de 1.9 € par tonne et de 1.1 € par tonne par rapport à la graine de lin broyée et la graine de lin extrudée respectivement.

Cette étude de formulation apporte la démonstration de la viabilité technico-économique de l'invention pour toute démarche nutritionnelle équilibrée en ALA Oméga 3.

Enfin, en terme d'applications, le procédé objet de l'invention vise à favoriser l'insertion des graines de lin dans l'alimentation en substitution d'autres sources d'énergie telles que les céréales et toutes sources lipidiques, et ainsi à répondre aux demandes d'éleveurs d'avoir des animaux en bonne santé et performants, et aux demandes des consommateurs d'avoir accès à des produits d'élevages plus équilibrés nutritionnellement, plus sûrs, sains et durables, et dont l'alimentation est d'origine locale.

Le domaine d'application du présent procédé peut concerner deux types d'usages pour l'élevage :

Usage pour l'élaboration d'une matière première

Elaboration d'un concentré à base de graine de lin, ou co-produits, devenant une matière première, en vue de son incorporation dans l'aliment complet ou complémentaire des animaux monogastriques et destiné aux fabricants d'aliments industriels et/ou à la ferme. Dans ce cas, l'incorporation minimale des dites graines de lin, ou leurs co-produits, est de 20% minimum, préférentiellement 30% minimum, voire 40% minimum.

Les autres matières premières composant le concentré, peuvent subir toute ou partie des étapes de la présente invention et ce, d'autant plus si celle-ci confère un avantage à ces matières premières.

Ainsi, les matières premières à privilégier sont les graines protéagineuses, tout produit amylacé tel que les céréales, ensuite les co-produits de céréales et de protéagineux, les tourteaux d'oléagineux et sources de glucides simples et complexes, puis à toutes autres matières premières usuelles en nutrition animale.

Usage pour l'élaboration d'un aliment

Elaboration d'un aliment complet ou complémentaire de céréales et destiné aux éleveurs pour l'alimentation de leurs animaux monogastriques. Dans cet autre cas, l'incorporation minimale des dites graines de lin, ou leurs coproduits, est de 1% minimum, préférentiellement 3% minimum.

Aussi, les produits issus de l'invention se distinguent selon les besoins des fabricants d'aliments et des éleveurs, selon qu'il s'agisse d'un positionnement strict d'apport d'Oméga 3 sans autre considération technique, ou selon qu'il s'agisse de filières de production locale, française et "Bleu Blanc Cœur" par exemple.

En effet, dans le cas de besoins d'Oméga 3 tracés et garanties pour répondre aux cahiers des charges non OGM ou "Bleu-Blanc-Cœur", on privilégie le traitement de la graine de lin, ou ses co-produits, en association avec de la graine protéagineuse.

Cette démarche à l'intérêt, dans le cadre d'un usage par les fabricants d'aliments, de pouvoir apporter en un même produit à la fois une source d'Oméga 3, mais aussi une source de protéine en lieu et place d'une matière première support sans grand intérêt technique (coproduits de céréales, céréales, etc.), et ainsi ne pas nécessiter une cellule de stockage supplémentaire pour des graines protéagineuses.

Voici un exemple de formulations :

Formules pour les démarches de filières non OGM / protéine locale :

A base de 50% de graines de Lin, et de 50% de graines protéagineuses ;
A base de 30% de graines de Lin, et de 70% de graines protéagineuses ;
A base de 15% de graines de Lin, et de 85% de graines protéagineuses ;

- Formules pour la démarche de filière "Bleu-Blanc-Cœur" :

A base de 50% de graines de Lin, et de 50% de graines protéagineuses ;
A base de 70% de graines de Lin, et de 30% de graines protéagineuses ;
A base de 85% de graines de Lin, et de 15% de graines protéagineuses.

Les graines, ou co-produits, issus de l'invention peuvent également trouver une valorisation chez les animaux domestiques, et chez les ruminants. Bien qu'elles aient d'abord été élaborées en vue d'une alimentation par les animaux monogastriques, les graines traitées conformément à l'invention sont tout à fait utilisables dans l'alimentation des animaux domestiques comme les chiens et les chats, et des ruminants.

Il est aussi intéressant d'utiliser les graines, et co-produits, issus de l'invention dans l'optique d'une alimentation par les animaux domestiques. Les graines de lin ainsi préparées apportent d'une part une source hautement digestible d'Oméga 3, d'autre part une source de protéine au potentiel allergène réduit. En effet, de par les réactions biochimiques à l'une des étapes thermiques du procédé, l'Homme de l'art sait que le risque allergène est significativement réduit (Franck et al, 2008).

Enfin l'usage dudit procédé peut s'étendre également aux marchés de l'alimentation humaine du fait de la valeur ajoutée nutritionnelle et de la sécurité alimentaire qu'il apporte. Ceci dans un contexte où les apports en Oméga 3 pour l'homme sont aujourd'hui appelés à être augmentés dans l'alimentation des populations des pays développés, tels que recommandés par l'Anses (Anses, 2011).

Ci-après sont détailles les références bibliographiques citées dans le présent texte :

- Legrand, P., J. M. Bourre, B. Descomps, G. Durand and S. Renaud, 2001: Apports nutritionnels conseillés pour la population française - Lipides. In: E. T. Doc ed. Apports nutritionnels conseillés pour la population française.
- Sauvant, D., J.-M. Perez, G. Tran, V. Bontems, P. Chapoutot, B. Doreau, C. Jondreville, S. J. Kaushik, M. Lessire, W. Martin-Rosset, F. Meschy, J. Noblet, J.-L. Peyraud, H. Rulquin and B. Seve, 2004: Tables de composition et de valeur nutritive des matières premières destinées aux animaux d'élevage.
- Hylemond, P.B. (1985) Metabolism of bile acids in intestinal icroflora, in: DANIELSEN, H. & SJ¨VALL, J. (Eds) Sterols and Bile Acids: New Comprehensive Biochemistry, pp. 331—343 (Amsterdam, Elsevier Science).
- Longstaff, M. & McNab, J.M. (1991) The inhibitory effects of hull polysaccharides and tannins of field beans (Vicia faba L.) on the digestion of amino acids, starch and lipid and on digestive enzyme activities in young chicks. British Journal of Nutrition, 65: 199—216
- Noblet, J., Y. Jacquelin-Peyraud, B. Quemeneur and G. Chesneau, 2008: Valeur énergétique de la graine de lin chez le porc : impact de la technologie de cuisson-extrusion. Journées Rech. Porc. 40, 203-208.
- Chesneau, G., S. Burban, F. Millet and P. Weill, 2009: Qualité du traitement des graines oléagineuses par cuisson-extrusion : matière grasse disponible. Renc. Rech. Rum. 16, 62-62.
- AFNOR. NF EN 16160 Avril 2012. Aliments pour animaux - Dosage de l'acide cyanhydrique par CLHP - Aliments des animaux
- Ikeda, K. & Kusano, T. (1983) In vitro inhibition of digestive enzymes by indigestible polysaccharides. Cereal Chemistry, 60: 260—262
- Bedford, M.R. Mechanism of action and practical environmental benefits from the use of feed enzymes. Anim. Feed Sci. Technol. 1995;25:193-200.
- Fengler, A.I. & Marquardt, R.R. (1988) Water-soluble pentosans from rye: II. Effects on rate of dialysis and on the retention of nutrients by the chick. Cereal Chemistry, 65:298—302
- Choct, M., R. J. Hughes, J. Wang, M. R. Bedford, A. J. Morgan and G. Annison, 1996: Increased small intestinal fermentation is partly responsible for the anti-nutritive activity of non-starch polysaccharides in chickens. British poultry science 37, 609-621.

- Elboutachfaiti, R., C. Delattre, A. Quéro, R. Roulard, J. Duchêne, F. Mesnard and E. Petit, 2017: Fractionation and structural characterization of six purified rhamnogalacturonans type I from flaxseed mucilage. Food Hydrocolloids 62, 273-279.
- Oomah, D. B., G. Mazza and E. O. Kenaschuk, 1996: Dehulling Characteristics of Flaxseed. LWT - Food Science and Technology 29, 245-250.
- Oomah, B. D. and G. Mazza, 1997: Effect of Dehulling on Chemical Composition and Physical Properties of Flaxseed. Lebensm.-Wiss. u.-Technol. 30, 135-140.
- Oomah, B. D. and G. Mazza, 1998: Fractionation of flaxseed with a batch dehuller. Ind. Crop. Prod. 9, 19-27.
- Akande, K. E. ; Doma, U. D. ; Agu, H. O. ; Adamu, H. M., 2010. Major antinutrients found in plant protein sources: their effect on nutrition. Pakistan J. Nutr., 9 (8): 827-832
- Weill, P., 2001: Procédé de détoxification des graines de lin. In: Valorex ed. EP1155626 A1, France.
- Meynard J.-M., Messéan A., Charlier A., Charrier F., Fares M., Le Bail M., Magrini M.B., Savini I., Réchauchère O., 2014, La diversification des cultures : lever les obstacles agronomiques et économiques, Éditions Quæ, 2014.

**Revendications**

1. Procédé de traitement de graines de lin (Linum usitatissimum) en vue d'améliorer leur valorisation à titre d'aliments, notamment pour les animaux,

   **caractérisé par le fait qu'**il comporte les étapes successives suivantes :

   a) Utilisation de graines de lin à la condition que ces graines présentent :

   - une teneur en acide cyanhydrique inférieure à 250 mg par kilogramme de matière brute ;
   - une teneur en matière grasse et/ou en acides gras Oméga 3, supérieure aux valeurs indiquées dans le tableau ci-dessous :

   | Composante nutritionnelle hautement valorisable | Unité | Teneur |
   |---|---|---|
   | Matière grasse | g/ 100g brut | > 38 |
   | Oméga 3 | %des AGT | > 54 |
   | Oméga 3 | g/ 100g brut | > 20 |
   | (AGT = acides gras totaux) | | |

   et, uniquement lorsque lesdites graines sont destinées à l'alimentation d'espèces monogastriques, une valeur en capacité de rétention d'eau ou une teneur en mucilages, ainsi qu'une teneur en cellulose brute et/ou en fibres insolubles dans les détergents neutres (NDF), ces valeur/teneurs étant inférieures à celles indiquées dans le tableau ci-dessous :

   | Composante nutritionnelle faiblement valorisable | Unité | Teneur |
   |---|---|---|
   | Cellulose brute | g/ 100g brut | < 11 |
   | NDF | g/ 100g brut | <22 |
   | Mucilages | g / kq brut | < 4.5 |
   | Capacité de rétention en eau | g/ g sec | < 4.5 |

   b) Mélange, dès lors qu'il y a au moins deux matières premières de nature et/ ou de qualité différentes puis fractionnement, ou fractionnement puis mélange, desdites graines issues de l'étape a) jusqu'à ce que les téguments et amandes desdites graines se rompent ;

   c) Mise en œuvre d'une étape thermique de préparation des graines issues de l'étape b) avec de la vapeur et/ou un liquide à base d'eau, jusqu'à obtention d'une température comprise entre 30 et 90°C et une humidité supérieure à 10% préférentiellement 15% la durée de cette préparation étant supérieure à 2 minutes, préférentiellement 15 minutes;

d) Mise sous pression minimale de 10 bars, des graines ou du mélange issus de l'étape c), pendant une durée supérieure à 10 secondes, jusqu'à l'obtention d'une température supérieure à 80°C, préférentiellement comprise entre 100 et 150° C;

et/ ou d bis) Chauffage des graines ou du mélange issus de l'étape d), respectivement de l'étape c), pendant une durée minimum de 15 minutes, préférentiellement de 30 minutes à 2 heures, à une température supérieure à 80°C, préférentiellement entre 90 et 150°C.

**2.** Procédé selon la revendication 1, **caractérisé par le fait que** l'étape thermique c) de préparation est réalisée en présence d'au moins une enzyme exogène identifiée parmi les familles suivantes : arabinofuranosidases, béta-glucanases, cellulases, glucoamylases, pectinases, pectine methyl estérases, phytases, protéases, xylanases et, préférentiellement, xylanases, beta-glucanases et pectinases, ladite enzyme exogène ayant préalablement été ajoutée aux graines ou au mélange.

**3.** Procédé selon la revendication 2, **caractérisé par le fait que**, à l'étape thermique c) de préparation en présence d'enzyme exogène, on se place à une humidité supérieure à 15% préférentiellement 25% et on fait durer la préparation pendant au moins 15 minutes, préférentiellement 60 minutes.

**4.** Procédé selon la revendication 1, **caractérisé par le fait que** lors de la mise en œuvre de ladite étape thermique de préparation, on procède à une agitation du mélange.

**5.** Procédé selon l'une des revendications 1 à 4, **caractérisé par le fait que**, lorsque l'on procède au mélange puis à un fractionnement, on procède à un nouveau mélange après ledit fractionnement.

**6.** Procédé selon l'une des revendications 1 à 5, **caractérisé par le fait que** l'on poursuit ledit fractionnement jusqu'à ce qu'au moins 90%des graines aient une granulométrie inférieure à 2000 micromètres, de préférence inférieure à 1500 micromètres.

**7.** Procédé selon l'une des revendications précédentes, **caractérisé par le fait que** l'on interrompt la mise en œuvre de l'étape d), respectivement d bis) dès lors que la teneur en HCN desdites graines a une valeur inférieure à celle indiquée dans le tableau ci-dessous et que la teneur en MGD a une valeur supérieure à celle indiquée dans le tableau ci-dessous :

| Critères d'appréciation du traitement | Objectif |
|---|---|
| HCN (mg/ kq) | < 30 |
| MGD (%) | > 65 |

**8.** Procédé selon l'une des revendications précédentes, **caractérisé par le fait que**, à la suite de l'étape a), ou en amont, on procède à un triage des graines selon un critère choisi parmi la taille, le poids, la forme, la densité, un paramètre aérodynamique, colorimétrique ou électrostatique.

**9.** Procédé selon l'une des revendications précédentes, **caractérisé par le fait que**, à la suite de l'étape a), on procède au dépelliculage des graines et on utilise l'une ou l'autre des fractions, préférentiellement lorsque le dépelliculage est **caractérisé par** une concentration d'au moins 3%de matière grasse dans la fraction dite amande, de préférence au moins 5%

**10.** Procédé selon l'une des revendications précédentes, **caractérisé par le fait que**, à la suite de l'étape a) ou b), on procède à la trituration des graines, entières ou dépelliculées, et on utilise le tourteau, préférentiellement lorsqu'il contient au moins 8%de matière grasse.

**11.** Procédé selon l'une des revendications précédentes, **caractérisé par le fait qu'**on mélange auxdites graines de lin au moins une autre matière première choisie dans le groupe constitué par les graines protéagineuses, les céréales, les co-produits de céréales et protéagineux, les sources de glucides simples et complexes, les tourteaux d'oléagineux et les autres co-produits d'oléagineux.

**12.** Procédé selon l'une des revendications précédentes, **caractérisé par le fait que** lors de la mise en œuvre d'au moins une desdites étapes, on ajoute auxdites graines au moins une matière antioxydante.

**13.** Procédé selon l'une des revendications précédentes, **caractérisé par le fait qu'**il comporte une étape, après la mise en œuvre de l'étape d), respectivement d bis), au cours de laquelle on refroidit lesdites graines.

**14.** Procédé selon l'une des revendications précédentes, **caractérisé par le fait que** l'on procède finalement au conditionnement, au transport et au stockage desdites graines à l'abri de la lumière.

**15.** Procédé selon l'une des revendications précédentes, **caractérisé par le fait que** l'on procède finalement au conditionnement desdites graines sous vide au moins partiel, ou par remplacement au moins partiel de l'air par un gaz inerte.

**Patentansprüche**

**1.** Verfahren zur Behandlung von Flachssamen (Linum usitatissimum) im Hinblick auf die Verbesserung ihres Nährwerts, insbesondere für Tiere,
**dadurch gekennzeichnet, dass** es die folgenden aufeinanderfolgenden Phasen umfasst:

a) Verwenden von Flachssamen unter der Bedingung, dass diese Samen Folgendes aufweisen:

- einen Blausäuregehalt von weniger als 250 mg pro Kilogramm Rohmaterial;
- einen höheren Fett- und/oder Omega-3-Fettsäuregehalt als die in der nachstehenden Tabelle angegebenen Werte:

| Hochwertiger Nahrungsbestandteil | Einheit | Gehalt |
|---|---|---|
| Fett | g / 100g brutto | > 38 |
| Omega 3 | % der GFS | > 54 |
| Omega 3 | g / 100g brutto | > 20 |
| (GFS = gesamte Fettsäure) | | |

und, nur wenn die Samen zur Fütterung von Monogastriern bestimmt sind, einen Wert für das Wasserrückhaltevermögen oder einen Schleimgehalt sowie einen Rohfasergehalt und/oder einen Gehalt an in neutralen Detergenzien unlöslichen Fasern (NDF), wobei diese Werte/Gehalte unter den in der nachstehenden Tabelle angegebenen Werten/Gehalten liegen müssen:

| Geringwertiger Nahrungsbestandteil | Einheit | Gehalt |
|---|---|---|
| Rohfaser | g / 100g brutto | < 11 |
| NDF | g / 100g brutto | < 22 |
| Schleimstoffe | g / kg brutto | < 4,5 |
| Rückhaltevermögen für Wasser | g / g trocken | < 4,5 |

b) Mischen, wenn mindestens zwei Rohstoffe unterschiedlicher Art und/oder Qualität vorhanden sind, und anschließendes Fraktionieren oder Fraktionieren und anschließendes Mischen der Samen aus Schritt a), bis die Schalen und Kerne der Samen aufbrechen;
c) Durchführen eines thermischen Aufbereitungsschritts der aus Schritt b) resultierenden Samen mit Wasserdampf und/oder einer Flüssigkeit auf Wasserbasis, bis eine Temperatur zwischen 30 und 90°C und eine Feuchtigkeit von mehr als 10%, vorzugsweise 15%, erreicht wird, wobei die Dauer dieser Aufbereitung mehr als 2 Minuten, vorzugsweise 15 Minuten beträgt;
d) Druckbeaufschlagen der Samen oder der Mischung aus Schritt c) mit mindestens 10 bar für einen Zeitraum von mehr als 10 Sekunden, bis eine Temperatur von mehr als 80°C, vorzugsweise zwischen 100 und 150°C, erreicht ist;

und/oder d bis) Erhitzen der Samen oder der Mischung aus Schritt d) bzw. Schritt c) für mindestens 15 Minuten, vorzugsweise 30 Minuten bis 2 Stunden, auf eine Temperatur von über 80°C, vorzugsweise zwischen 90 und 150°C.

2. Verfahren nach Anspruch 1, **dadurch gekennzeichnet, dass** der thermische Aufbereitungsschritt c) in Gegenwart mindestens eines exogenen Enzyms durchgeführt wird, das aus den folgenden Familien identifiziert wurde: Arabinofuranosidasen, Beta-Glucanasen, Cellulasen, Glucoamylasen, Pektinasen, Pektinmethylesterasen, Phytasen, Proteasen, Xylanasen und vorzugsweise Xylanasen, Beta-Glucanasen und Pektinasen, wobei das exogene Enzym zuvor zu den Samen oder zu der Mischung gegeben wurde.

3. Verfahren nach Anspruch 2, **dadurch gekennzeichnet, dass** im thermischen Aufbereitungsschritt c) in Gegenwart eines exogenen Enzyms die Feuchtigkeit auf mehr als 15%, vorzugsweise 25%, eingestellt wird und die Aufbereitung mindestens 15 Minuten, vorzugsweise 60 Minuten, dauert.

4. Verfahren nach Anspruch 1, **dadurch gekennzeichnet, dass** die Mischung während der Durchführung des genannten thermischen Aufbereitungsschritts gerührt wird.

5. Verfahren nach einem der Ansprüche 1 bis 4, **dadurch gekennzeichnet, dass** beim Mischen und anschließenden Fraktionieren ein weiteres Mischen nach dem Fraktionieren durchgeführt wird.

6. Verfahren nach einem der Ansprüche 1 bis 5, **dadurch gekennzeichnet, dass** die Fraktionierung so lange fortgesetzt wird, bis mindestens 90% der Samen eine Partikelgröße von weniger als 2000 Mikrometern, vorzugsweise weniger als 1500 Mikrometern, aufweisen.

7. Verfahren nach einem der vorstehenden Ansprüche, **dadurch gekennzeichnet, dass** die Durchführung von Schritt d) bzw. d bis) unterbrochen wird, sobald der HCN-Gehalt der Samen einen niedrigeren Wert als den in der nachstehenden Tabelle angegebenen und der Gehalt an verfügbaren Fetten einen höheren Wert als den in der nachstehenden Tabelle angegebenen aufweist:

| Kriterien für die Bewertung der Behandlung | Zielsetzung |
|---|---|
| HCN (mg / kg) | < 30 |
| Verfügbare Fette (%) | > 65 |

8. Verfahren nach einem der vorstehenden Ansprüche, **dadurch gekennzeichnet, dass** die Samen nach Schritt a) oder stromaufwärts nach einem Kriterium sortiert werden, das aus Größe, Gewicht, Form, Dichte, einem aerodynamischen, kolorimetrischen oder elektrostatischen Parameter ausgewählt wird.

9. Verfahren nach einem der vorstehenden Ansprüche, **dadurch gekennzeichnet, dass** die Samen nach Schritt a) geschält werden und die eine oder andere Fraktion verwendet wird, vorzugsweise wenn die Schälung durch eine Konzentration von mindestens 3% Fett in der sogenannten Kernfraktion, vorzugsweise mindestens 5%, gekennzeichnet ist.

10. Verfahren nach einem der vorstehenden Ansprüche, **dadurch gekennzeichnet, dass** die Samen nach Schritt a) oder b) ganz oder geschält zerkleinert werden und der Kuchen verwendet wird, vorzugsweise wenn er mindestens 8% Fett enthält.

11. Verfahren nach einem der vorstehenden Ansprüche, **dadurch gekennzeichnet, dass** mindestens ein anderer Rohstoff, ausgewählt aus der Gruppe bestehend aus eiweißhaltigen Samen, Getreide, Getreide- und eiweißhaltige Nebenerzeugnissen, einfachen und komplexen Kohlenhydratquellen, Ölsaatenkuchen und anderen Ölsaaten-Nebenerzeugnissen, mit den Flachssamen gemischt wird.

12. Verfahren nach einem der vorstehenden Ansprüche, **dadurch gekennzeichnet, dass** während der Durchführung mindestens eines der Schritte den Samen mindestens ein antioxidatives Mittel zugesetzt wird.

**13.** Verfahren nach einem der vorstehenden Ansprüche, **dadurch gekennzeichnet, dass** es nach der Durchführung von Schritt d) bzw. d bis) einen Schritt umfasst, bei dem die Samen abgekühlt werden.

**14.** Verfahren nach einem der vorstehenden Ansprüche, **dadurch gekennzeichnet, dass** die Samen schließlich unter Ausschluss von Licht verpackt, transportiert und gelagert wird.

**15.** Verfahren nach einem der vorstehenden Ansprüche, **dadurch gekennzeichnet, dass** die Samen schließlich unter zumindest teilweisem Vakuum oder durch zumindest teilweisen Ersatz der Luft durch ein Inertgas verpackt werden.

**Claims**

**1.** A process for treating flax (*Linum usitatissimum*) seeds in order to enhance its value as food, especially for animals **characterized in that** it comprises the following successive steps:

a) Use of flax seeds provided that these seeds have:

- a hydrocyanic acid content of less than 250 mg per kilogram of raw material;
- a fat and/or omega-3 fatty acid content higher than the values indicated in the table below:

| Nutritional component highly valued | Unit | Content |
|---|---|---|
| Fat | g/100 g raw | > 38 |
| omega-3 | % TFA | > 54 |
| omega-3 | g/100 g raw | > 20 |
| (TFA = total fatty acids) | | |

and, only where said seeds are intended for the feeding of monogastric species, a value for water retention capacity or mucilage content, as well as a content of crude cellulose and/or neutral detergent fiber (NDF), these values/contents being lower than those indicated in the table below:

| Nutritional component low value | Unit | Content |
|---|---|---|
| Raw cellulose | g/100 g raw | < 11 |
| NDF | g/100 g raw | < 22 |
| Mucilages | g/kg raw | < 4.5 |
| Water retention capacity | g/g dry | < 4.5 |

And with

b) Mixing, where there are at least two raw materials of different nature and/or quality and then fractionating, or fractionating and then mixing, said seeds from step a) until the seed coats and kernels of said seeds break;
c) Implementing a thermal step of preparing the seeds from step b) with steam and/or a water-based liquid, until a temperature of between 30 and 90°C and a humidity of more than 10%, preferentially 15%, is reached, the duration of this preparation being more than 2 minutes, preferentially 15 minutes;
d) Pressurizing the seeds or mixture from step c) for more than 10 seconds at a minimum pressure of 10 bars until a temperature of more than 80°C, preferentially between 100 and 150°C, is reached;

and/or d1) heating the seeds or mixture from step d) or step c) for a minimum of 15 minutes, preferentially 30 minutes to 2 hours, to a temperature above 80°C, preferentially between 90 and 150°C.

**2.** The process as claimed in claim 1, **characterized in that** the thermal preparation step c) is carried out in the presence of at least one exogenous enzyme identified from the following families: arabinofuranosidases, beta-glucanases, cellulases, glucoamylases, pectinases, pectin methyl esterases, phytases, proteases, xylanases and, preferentially, xylanases, beta-glucanases and pectinases, said exogenous enzyme having previously been added to the seeds or to the mixture.

3. The process as claimed in claim 2, **characterized in that**, in the thermal step c) of preparation in the presence of exogenous enzyme, a humidity of more than 15%, preferentially 25%, is set and the preparation is allowed to last for at least 15 minutes, preferentially 60 minutes.

4. The process as claimed in claim 1, **characterized in that**, during the implementation of said thermal preparation step, the mixture is stirred.

5. The process as claimed in one of claims 1 to 4, **characterized in that**, when mixing is carried out and then fractionated, a new mixing is carried out after said fractionation.

6. The process as claimed in one of claims 1 to 5, **characterized in that** said fractionation is continued until at least 90% of the seeds have a grain size of less than 2000 micrometers, preferentially less than 1500 micrometers.

7. The process as claimed in one of the preceding claims, **characterized in that** the implementation of step d), respectively d1) is interrupted as soon as the HCN content of said seeds has a value lower than that indicated in the table below and the AF content has a value higher than that indicated in the table below:

| Criteria for assessing treatment | Objective |
|---|---|
| HCN (mg/kg) | < 30 |
| AF (%) | > 65 |

8. The process as claimed in one of the preceding claims, **characterized in that**, following step a), or upstream, the seeds are sorted according to a criterion chosen from among size, weight, shape, density, an aerodynamic, colorimetric or electrostatic parameter.

9. The process as claimed in one of the preceding claims, **characterized in that**, following step a), the seeds are decoated and one or other of the fractions is used, preferentially when the decoating is **characterized by** a concentration of at least 3% fat in the so-called kernel fraction, preferentially at least 5%.

10. The process as claimed in one of the preceding claims, **characterized in that**, following step a) or b), the seeds, whole or decoated, are crushed and the cake is used, preferentially when it contains at least 8% fat.

11. The process as claimed in one of the preceding claims, **characterized in that** at least one other raw material selected from the group consisting of protein-rich seeds, cereals, cereal and protein co-products, simple and complex carbohydrate sources, oilseed cakes and other oilseed co-products is mixed with said flax seeds.

12. The process as claimed in one of the preceding claims, **characterized in that** at least one antioxidant material is added to said seeds during the implementation of at least one of said steps.

13. The process as claimed in one of the preceding claims, **characterized in that** it comprises a step, after the implementation of step d), respectively d1), during which said seeds are cooled.

14. The process as claimed in one of the preceding claims, **characterized in that** said seeds are finally packaged, transported and stored away from light.

15. The process as claimed in one of the preceding claims, **characterized in that** said seeds are finally packaged under at least partial vacuum, or by at least partial replacement of the air by an inert gas.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 1155626 A

- EP 1155626 A1

### Littérature non-brevet citée dans la description

- Apports nutritionnels conseillés pour la population française - Lipides. **LEGRAND, P. ; J. M. BOURRE ; B. DESCOMPS ; G. DURAND ; S. RENAUD.** Apports nutritionnels conseillés pour la population française. 2001

- **SAUVANT, D. ; J.-M. PEREZ ; G. TRAN ; V. BONTEMS ; P. CHAPOUTOT ; B. DOREAU ; C. JONDREVILLE ; S. J. KAUSHIK ; M. LESSIRE ; W. MARTIN-ROSSET.** *Tables de composition et de valeur nutritive des matières premières destinées aux animaux d'élevage,* 2004

- Metabolism of bile acids in intestinal icroflora. **HYLEMOND, P.B.** Sterols and Bile Acids: New Comprehensive Biochemistry. Amsterdam, Elsevier Science, 1985, 331-343

- **LONGSTAFF, M. ; MCNAB, J.M.** The inhibitory effects of hull polysaccharides and tannins of field beans (Vicia faba L.) on the digestion of amino acids, starch and lipid and on digestive enzyme activities in young chicks. *British Journal of Nutrition,* 1991, vol. 65, 199-216

- **NOBLET, J. ; Y. JACQUELIN-PEYRAUD ; B. QUEMENEUR ; G. CHESNEAU.** Valeur énergétique de la graine de lin chez le porc : impact de la technologie de cuisson-extrusion. *Journées Rech. Porc,* 2008, vol. 40, 203-208

- **CHESNEAU, G. ; S. BURBAN ; F. MILLET ; P. WEILL.** Qualité du traitement des graines oléagineuses par cuisson-extrusion : matière grasse disponible. *Renc. Rech. Rum.,* 2009, vol. 16, 62-62

- **IKEDA, K. ; KUSANO, T.** In vitro inhibition of digestive enzymes by indigestible polysaccharides. *Cereal Chemistry,* 1983, vol. 60, 260-262

- **BEDFORD, M.R.** Mechanism of action and practical environmental benefits from the use of feed enzymes. *Anim. Feed Sci. Technol.,* 1995, vol. 25, 193-200

- **FENGLER, A.I. ; MARQUARDT, R.R.** Water-soluble pentosans from rye: II. Effects on rate of dialysis and on the retention of nutrients by the chick. *Cereal Chemistry,* 1988, vol. 65, 298-302

- **CHOCT, M. ; R. J. HUGHES ; J. WANG ; M. R. BEDFORD ; A. J. MORGAN ; G. ANNISON.** Increased small intestinal fermentation is partly responsible for the anti-nutritive activity of non-starch polysaccharides in chickens. *British poultry science,* 1996, vol. 37, 609-621

- **ELBOUTACHFAITI, R. ; C. DELATTRE ; A. QUÉRO ; R. ROULARD ; J. DUCHÊNE ; F. MESNARD ; E. PETIT.** Fractionation and structural characterization of six purified rhamnogalacturonans type I from flaxseed mucilage. *Food Hydrocolloids,* 2017, vol. 62, 273-279

- **OOMAH, D. B. ; G. MAZZA ; E. O. KENASCHUK.** Dehulling Characteristics of Flaxseed. *LWT - Food Science and Technology,* 1996, vol. 29, 245-250

- **OOMAH, B. D. ; G. MAZZA.** Effect of Dehulling on Chemical Composition and Physical Properties of Flaxseed. *Lebensm.-Wiss. u.-Technol.,* 1997, vol. 30, 135-140

- **OOMAH, B. D. ; G. MAZZA.** Fractionation of flaxseed with a batch dehuller. *Ind. Crop. Prod.,* 1998, vol. 9, 19-27

- **AKANDE, K. E. ; DOMA, U. D. ; AGU, H. O. ; ADAMU, H. M.** Major antinutrients found in plant protein sources: their effect on nutrition. *Pakistan J. Nutr.,* 2010, vol. 9 (8), 827-832

- **WEILL, P.** Procédé de détoxification des graines de lin. 2001

- **MEYNARD J.-M. ; MESSÉAN A. ; CHARLIER A. ; CHARRIER F. ; FARES M. ; LE BAIL M. ; MAGRINI M.B. ; SAVINI I. ; RÉCHAUCHÈRE O.** La diversification des cultures : lever les obstacles agronomiques et économiques. 2014